# EUROPÄISCHE PATENTSCHRIFT

(11) **EP 4 366 503 B1**
(45) Veröffentlichungstag und Bekanntmachung des Hinweises auf die Patenterteilung: **26.08.2026**
(21) Anmeldenummer: 22732174.2
(22) Anmeldetag: 08.06.2022
(51) Int. Cl.: A01C 17/00

(54) **VERFAHREN ZUR ELEKTRONISCHEN WINDKOMPENSATION EINES DUENGERSTREUERS, REGELUNGSSYSTEM UND DUENGERSTREUER**
METHOD FOR ELECTRONIC WIND COMPENSATION OF A FERTILIZER SPREADER, CONTROL SYSTEM AND FERTILIZER SPREADER
PROCÉDÉ DE COMPENSATION ÉLECTRONIQUE DU VENT D'UN ÉPANDEUR D'ENGRAIS, SYSTÈME DE COMMANDE ET ÉPANDEUR D'ENGRAIS

(30) Priorität: 05.07.2021 DE 102021117270
(43) Veröffentlichungstag der Anmeldung: 15.05.2024
(73) Patentinhaber: Amazonen-Werke H. Dreyer SE & Co. KG, 49205 Hasbergen (DE)
(72) Erfinder: DREYER, Justus, 49078 Osnabrück (DE); GROSSE BRINKHAUS, Andre, 48149 Münster (DE); KIELHORN, Arnd, 49090 Osnabrück (DE); STRÖBEL-FRÖSCHLE, Markus, 49124 Georgsmarienhütte (DE); RAHE, Florian, 49504 Lotte (DE); HEISEL, Per-Christian, 49080 Osnabrück (DE)
(74) Vertreter: Grünecker Patent- und Rechtsanwälte PartG mbB
(86) Internationale Anmeldenummer: PCT/EP2022/065454
(87) Internationale Veröffentlichungsnummer: WO 2023/280496

(56) Entgegenhaltungen:
- EP-A1- 2 556 738
- EP-A1- 3 216 335
- DE-A1- 102017 109 308

## Beschreibung

Die Erfindung betrifft ein Verfahren gemäß den Oberbegriffen der Ansprüche 1 und 2, ein dazu ausgebildetes Regelungssystem und einen damit ausgestatteten Düngerstreuer.

Aus der gattungsbildenden DE 10 2016 101 185 A1 ist es bekannt, den Streufächer (das Streubild) eines Düngerstreuers zu korrigieren, indem Sollwerte, mit denen Stellglieder des Düngerstreuers zur Erzeugung eines vorbestimmten Streufächers gesteuert / geregelt werden, in Abhängigkeit von einer gemessenen Windstärke und Windrichtung kompensatorisch angepasst werden. Dies erfolgt bei Seitenwind derart, dass sich die seitliche Ausdehnung des Streufächers auf einer dem Seitenwind zugewandten Seite des Düngerstreuers vergrößert und auf einer dem Seitenwind abgewandten Seite des Düngerstreuers verkleinert. Die oben genannte Vergrößerung kann beim Grenzstreuen an einer Feldgrenze auf der Seite des Düngerstreuers, die der Feldgrenze zugewandt ist, gezielt unterdrückt werden.

Zum Korrigieren des Streufächers kann demnach mindestens eines der folgenden Stellglieder angesteuert werden. Mit den Antriebselementen der Schleuderscheiben lässt sich mittels ihrer Drehzahl die Wurfweite des Düngers einstellen. Je schneller die Scheibe rotiert, desto größer ist die Wurfweite. Ferner kann der Aufgabepunkt (die Aufgabefläche) des Düngers auf der jeweiligen Schleuderscheibe aus einem darüber jeweils angeordneten Einleitsystem verdreht oder anderweitig positioniert werden, um den Abwurfwinkel einzustellen und den Streufächer demzufolge nach außen oder nach innen zu drehen. Es ist auch möglich die Dosierorgane des Einleitsystems anzusteuern, um die pro Zeiteinheit ausgebrachte Düngermenge und demzufolge die Verteilung und Ausgabemenge des Düngers pro Flächeneinheit anzupassen.

Aus der DE 10 2016 101 185 A1 ist es ferner bekannt, mindestens einen der nachfolgend aufgeführten Sollwerte oder einen dazu proportionalen Wert zur Korrektur des Streufächers in Abhängigkeit von der gemessenen Windstärke und Windrichtung für die jeweilige Schleuderscheibe anzupassen: Drehzahlen, Dosiermengen des Düngers pro Zeiteinheit, Abwurfwinkel des Düngers, Stellungen der Aufgabepunkte der Düngereinleitsysteme, Winkelpositionen der auf den Schleuderscheiben angeordneten Wurfschaufeln.

Das gezielte Bestreuen von Teilbreiten eines Streufächers ist zudem aus der DE 10 2017 100 668 A1 bekannt. Weitere Verfahren sind in DE 10 2017 109308 A1 und in EP 2 556 738 A1 offenbart.

Die oben genannten Korrekturmaßnahmen können im Prinzip auch bei der nachfolgend beschriebenen Erfindung angewendet werden.

Nachteilig war bisher jedoch, dass lediglich Seitenwind berücksichtigt wurde und zwar in Form der gemessenen Windstärke und Windrichtung. Dies ermöglicht zwar eine Anpassung der bei Seitenwind resultierenden Arbeitsbreite an eine für den Streuvorgang vorgegebene Soll-Arbeitsbreite, beispielsweise indem die Soll-Abwurfwinkel individuell kompensatorisch verändert werden, wozu der jeweilige Aufgabepunkt und gegebenenfalls auch die jeweilige Drehzahl entsprechend verstellt werden.

Jedoch kann sich die Wurfweite des Düngers auch bei Gegenwind oder Rückenwind so stark verändern, dass beispielsweise die berechneten Schaltpunkte der Teilbreiten zu einem ungleichmäßigen und/oder fehlgeleiteten Austrag des Düngers führen.

Auch hat sich herausgestellt, dass die Windverhältnisse im Bereich des Streufächers so stark von denjenigen am Windmesser abweichen können, dass es auch aus diesem Grund zu einem zu ungenauen Austrag des Düngers kommt.

Es besteht daher Bedarf für demgegenüber verbesserte Verfahren und Vorrichtungen zum windkorrigierten Ausbringen von Dünger auf landwirtschaftlichen Flächen.

Die gestellte Aufgabe wird mit Verfahren nach den Ansprüchen 1 und 2 gelöst.

Die Verfahren dienen zur elektronischen Windkompensation / Regelung eines Düngerstreuers. Gattungsgemäß bringt dieser Dünger auf eine landwirtschaftliche Fläche mittels rotierender Streuscheiben aus, wobei die Positionen von Aufgabeflächen für den Dünger auf den Streuscheiben in Abhängigkeit von Soll-Abwurfwinkeln eingestellt werden, die für die Streuscheiben einzeln auf der Grundlage eines beim Ausbringen herrschenden Winds kompensatorisch angepasst werden, um einer durch den Wind verursachten Abweichung einer Ist-Querverteilung des Düngers von einer Soll-Querverteilung entgegenzuwirken.

Erfindungsgemäß werden ferner die Drehzahlen der Streuscheiben kompensatorisch angepasst, um einer durch den Wind verursachten Abweichung einer Ist-Wurfweite des Düngers von seiner Soll-Wurfweite entgegenzuwirken.

Vorteilhafte Weiterbildungen des erfindungsgemäßen Verfahrens sind in den Unteransprüchen angegeben.

Vorteilhafte Weiterbildungen sind - sofern nicht ausdrücklich anders angegeben - jedoch auch ausgehend vom gattungsgemäßen Verfahren möglich, wobei beliebige technisch sinnvolle Kombination der nachfolgend beschriebenen Ausführungsformen denkbar sind.

Durch Windeinfluss können von den Streuscheiben erzeugte Streufächer des Düngers, die ohne Windeinfluss in der Regel einer näherungsweise nierenförmigen Flächenverteilung entsprechen, erheblich verzerrt werden. Das beschriebene Regelungssystem wirkt dem durch Vorgabe wenigstens eines daran kompensatorisch angepassten Sollwerts entgegen. Bewährt hat sich hierfür die Vorgabe von Sollwerten für den Abwurfwinkel von der jeweiligen Streuscheibe, dem als Einstellparameter üblicherweise je ein Sollwert für die Position der Aufgabefläche und für die Drehzahl zugeordnet werden.

Auf der Grundlage gemessener Windrichtung und Windstärke werden diese und gegebenenfalls weitere Einstellparameter des Düngerstreuers, beispielsweise die Drehzahl der jeweiligen Streuscheibe, gezielt so verändert, dass der Verzerrung entgegengewirkt wird, oder dass diese bei weiteren Überfahrten, beispielsweise einer Rückfahrt in die entgegengesetzte Richtung, durch nachfolgende Düngungen ausgeglichen wird. Letzteres kann beispielsweise der Fall sein, wenn die Windverhältnisse eine ausreichende Entzerrung der Streufächer nicht zulassen.

Die Soll-Abwurfwinkel sind beispielsweise durch Geraden definiert, die von den Drehachsen der Streuscheiben zum jeweiligen Verteilungsschwerpunkt der erzeugten Streufächer (flächigen Streubilder) des Düngers verlaufen. Entsprechendes gilt für Wurfweiten, die beispielsweise zwischen Streuscheibe und Verteilungsschwerpunkt definiert sind. Der Verteilungsschwerpunkt ist typischerweise als Schnittpunkt der 50%-Perzentile der Streufächer hinsichtlich radialer Verteilung und Umfangsverteilung definiert.

Bei dem Dünger handelt es sich beispielsweise um einen Mineraldünger. Prinzipiell könnte aber beliebiges körniges Streugut verwendet werden.

Gemäß einem Aspekt der Erfindung werden die Windrichtung und die Windstärke des Winds zur Anpassung der Soll-Abwurfwinkel und/oder zur Reduzierung der Abweichung der Ist-Wurfweite vektoriell in eine Fahrtrichtungskomponente parallel zur Fahrtrichtung und eine Seitenkomponente orthogonal zur Fahrtrichtung zerlegt.

Die Seitenkomponente wirkt sich vorrangig auf die Querverteilung des Düngers und die Arbeitsbreite aus, die Fahrtrichtungskomponente vorrangig auf die Wurfweite. Beide Störeffekte können prinzipiell über die Positionen der Aufgabeflächen des Düngers auf den Streuscheiben und deren Drehzahl kompensiert werden. Die kompensatorische Anpassung dieser Einstellparameter kann durch die Komponentenzerlegung präziser gewichtet und die Korrektur von Streufächern dadurch optimiert werden. Hierbei können die zugeordneten Dosiermengen des Düngers für die Streuscheiben entsprechend angepasst werden.

Gemäß einem alternativen Aspekt der Erfindung wird aus der Windrichtung und der Windgeschwindigkeit des Winds eine Verlagerung des mit den Streuscheiben unter Windeinfluss erzeugten Streufächers gegenüber einem ohne Windeinfluss erzeugten Streufächer ermittelt, wobei dann wenigstens eine zur Fahrtrichtung orthogonale Seitenkomponente der Verlagerung zur Reduzierung der Abweichung der Ist-Wurfweite berechnet wird und insbesondere eine Anpassung der Soll-Abwurfwinkel auf der Grundlage der Verlagerung insgesamt berechnet wird.

Erfindungsgemäß wird die Abweichung der Ist-Wurfweite auf der Grundlage der Seitenkomponente der Windrichtung / Windstärke und insbesondere unter deren jeweils überwiegender Gewichtung gegenüber einer zugehörigen Fahrtrichtungskomponente kompensatorisch reduziert.

Vorzugsweise werden die Soll-Abwurfwinkel auf der Grundlage von der Verlagerung zugeordneten Ist-Abwurfwinkeln und insbesondere unter Berücksichtigung der Kompensation der Ist-Wurfweite kompensatorisch angepasst.

Ist-Wurfweiten und/oder Ist-Abwurfwinkel können auf prinzipiell bekannte Weise berechnet und/oder gemessen werden.

Vorzugsweise werden von den Streuscheiben erzeugte Streufächer und/oder Querverteilungen durch kompensatorische Reduzierung der Abweichung der Ist-Wurfweite von ihrem Standardwert für Windstille korrigiert und insbesondere entzerrt.

Vorzugsweise werden mit den Streuscheiben erzeugte Streufächer und/oder Querverteilungen des Düngers durch kompensatorische Veränderung der Soll-Abwurfwinkel gegenüber ihren Standardwerten für Windstille entzerrt. Dies erfolgt beispielsweise durch eine aktuelle Berechnung kompensatorischer Werte für die Soll-Abwurfwinkel und/oder deren Auswahl aus einer Liste zuvor berechneter kompensatorischer Werte.

Vorzugsweise wird ein windverändernder Einfluss wenigstens eines auf der landwirtschaftlichen Fläche vorhandenen topographischen Merkmals durch Messung und/oder Berechnung quantifiziert und geht dann in eine Berechnung des im Bereich eines von den Streuscheiben erzeugten Streufächers herrschenden Winds zu dessen Kompensation ein. Die Berechnung erfolgt dann insbesondere ausgehend von einem im Bereich der landwirtschaftlichen Fläche beim Ausbringen gemessenen Wind.

Topographische Merkmale können beispielsweise die Topographie der landwirtschaftlichen Fläche, Pflanzen, wie Bäume oder Sträucher und/oder Gebäude sein.

Vorzugsweise werden dem topographischen Merkmal und/oder einem diesem zugeordneten Teilbereich der landwirtschaftlichen Fläche Windkoeffizienten zugeordnet, die den windverändernden Einfluss des topographischen Merkmals in Abhängigkeit von unterschiedlichen Windrichtungen quantifizieren.

Vorzugsweise werden Windstärke und Windgeschwindigkeit beim Ausbringen im Bereich des Düngerstreuers gemessen und mit zugehörigen geografischen Messpositionen gespeichert. Ferner werden diesen Messwerten dann die geografische Position wenigstens eines topographischen Merkmals der landwirtschaftlichen Fläche sowie eine herrschende Hauptwindrichtung und Hauptwindstärke zugeordnet, um einen windverändernden Einfluss des topografischen Merkmals ortsspezifisch zu quantifizieren.

Beispielsweise können so Messwerte der Windrichtungen und Windstärken mit zugehörigen topographischen Messpositionen insbesondere unter Berücksichtigung einer für den Zeitpunkt der jeweiligen Windmessung und die landwirtschaftliche Fläche prognostizierten und/oder gemessenen Hauptwindrichtung und Hauptwindstärke gespeichert werden und daraus von den topographischen Merkmalen verursachte lokale Abweichungen der Windrichtungen und Windstärken von Hauptwindrichtungen und Hauptwindstärken berechnet werden.

Beispielsweise können die Windrichtung und Windstärke sowie zugehörige geographische Messpositionen mittels wenigstens einer die landwirtschaftliche Fläche überfliegenden und insbesondere dem Düngerstreuer vorausfliegenden und/oder Luv-seitig fliegenden Drohne gemessen werden.

Vorzugsweise werden in unterschiedlichen Höhen insbesondere mittels eines mit dem Düngerstreuer mitfahrenden Windsensors und einer die landwirtschaftliche Fläche befliegenden Drohne gemessene Windrichtungen und Windgeschwindigkeiten maschinell miteinander verglichen, um den im Bereich des Düngerstreuers herrschenden Wind qualitativ abzuschätzen hinsichtlich des Vorherrschens gleichmäßiger, turbulenter oder böiger Windverhältnisse.

Vorzugsweise werden mittels eines mit dem Düngerstreuer mitfahrenden Windsensors und/oder wenigstens einer die landwirtschaftliche Fläche befliegenden Drohne gemessene Windrichtungen und Windgeschwindigkeiten in Form einer Windkarte gespeichert und insbesondere einer topografischen Karte der landwirtschaftlichen Fläche überlagert.

Vorzugsweise wird die Windkarte mit einer Applikationskarte enthaltend ortsspezifische Soll-Streumengen und applizierte Ist-Streumengen des Düngers, mit einer Niederschlagskarte enthaltend historische und/oder prognostizierte örtliche Niederschlagsmengen, mit einer Sonneneinstrahlungskarte enthaltend historische und/oder prognostizierte örtliche Sonnenstunden und/oder mit einer Einstellungskarte enthaltend ortsspezifische Einstellparameter des Düngerstreuers maschinell verglichen, um die zukünftige Ausbringvorgänge zum Ausbringen des Düngers auf der landwirtschaftlichen Fläche auf der Grundlage historischer Daten vergleichbarer Ausbringvorgänge zu planen.

Dadurch können im Bereich der Streufächer zu erwartende Abweichungen von der gemessenen Windrichtung und Windstärke noch präziser abgeschätzt werden, beispielsweise zur Ermittlung möglicher Einflüsse von Thermik, um eine topographisch korrigierte Windrichtung und Windstärke zu berechnen und diese zur Bestimmung der Soll-Abwurfwinkel und Drehzahlen der Streuscheiben zu verwenden.

Windsensoren erlauben generell nur die Windmessungen an bestimmten Punkten, Bekannt ist beispielsweise eine Ultraschallmessung mit kreuzförmiger Messanordnung, eine Messung mittels Doppler-Lidars, eine Ermittlung über Satellitendaten und/oder Messung mittels Drohnen. Bei bisherigen Systemen wird davon ausgegangen, dass die gemessenen Windrichtungen und Windgeschwindigkeiten auch im gesamten Bereich des Streufächers vorliegen und/oder sich bei Verwendung mehrerer Sensoren durch Interpolation / Extrapolation berechnen lassen. Jedoch können sich die Windverhältnisse insbesondere im hinteren Teil des Streufächers auch aufgrund topografischer Einflüsse, insbesondere durch Windhindernisse wie Hügel, Gebäude, Bäume, erheblich von den Windverhältnissen im Bereich von Windsensoren unterscheiden.

Mittels Wind- und Positionsbestimmung sowie Zuordnung geografischer Positionen von windverändernden topografischen Merkmalen, beispielsweise anhand einer topografischen Karte, kann von punktuell gemessenem Wind auf die Strömungsverhältnisse im gesamten Bereich des jeweiligen Streufächers (vorzugsweise umfassend alle Flugbahnen des Düngers) geschlossen werden. Dazu können Strömungssimulationen und/oder ortsabhängige und gegebenenfalls windrichtungsabhängig Windkoeffizienten zur Charakterisierung örtlicher Windabschwächung oder -verstärkung verwendet werden.

Durch wiederholtes Durchfahren der betreffenden Strömungsfelder sammeln sich Winddaten an, mit denen die Simulationen und/oder ermittelten Windkoeffizienten validiert und optimiert werden können.

Mit Hilfe der Simulationen und/oder der ermittelten Windkoeffizienten kann beim Streuen eine Verteilqualität des Düngers berechnet und gespeichert werden. Durch Berücksichtigung der Topographie und gegebenenfalls weiterer Umgebungsinformationen und/oder daraus abgeleiteter Windkoeffizienten ist dies präziser möglich als auf der alleinigen Grundlage herkömmlicher Windmessung. Vor oder während eines Streuvorgangs kann vor schlechter Verteilqualität gewarnt werden.

Ergänzend oder alternativ können Einstellwerte des Düngerstreuers bei Annäherung an relevante topographische Merkmale bzw. damit verbundene Windänderungen angepasst werden, beispielsweise durch Änderung der Drehzahl der jeweiligen Streuscheibe zur vorausschauenden Anpassung der Wurfweite.

Zudem ist eine Fahrgassenplanung für zukünftige Streuvorgänge auf Basis solcher Information möglich / anpassbar. Beispielsweise muss in Grünland kein festgelegtes Fahrgassensystem beachtet werden, sodass dort Streuvorgänge mit angepassten Fahrgassensystemen denkbar sind. Es ist auch möglich, auf Basis dieser Informationen ein angepasstes Fahrgassensystem bereits bei einem zukünftigen Aussaatvorgang vorzusehen.

Beim Herausfahren aus Bereichen mit besonderen Windbedingungen wie relevantem Windschatten müssten Einstellwerte des Düngerstreuers beispielsweise nicht bereits dann geändert werden, wenn der Windsensor Änderungen anzeigt, sondern erst dann, wenn größere Anteile des Streufächers nicht mehr den besonderen Windbedingungen unterliegen.

Bei der windbedingten Anpassung von Einstellwerten könnten beispielsweise folgende Parameter berücksichtigt werden: Relativposition Sensor zu Streufächer bzw. Teilbreite; Bewegungsrichtung und Geschwindigkeit; Relativpositionen zum topografischen Merkmal; letzte bekannte bzw. gemessene Windrichtung und Windgeschwindigkeit; Flugeigenschaften des Düngers. Vorteilhaft ist dabei eine vektorielle Komponentenzerlegung der Windrichtung.

Winddaten können zur späteren Auswertung in Form einer Windkarte abgelegt werden, wobei die Karte vorzugsweise auch die Topographie wiedergibt, um deren Zusammenhang mit den örtlichen Windverhältnissen analysieren zu können. Hierbei kann auf vorteilhafte Weise auch die örtliche Thermik berücksichtigt werden. Hierfür können Temperaturen, Sonneneinstrahlung und Oberfläche des Untergrunds analysiert und bewertet werden.

Vorzugsweise werden die Streuscheiben und zugehörigen Einleitsysteme beim Grenzstreuen je nach Windrichtung bezüglich der abgefahrenen Grenze mit unterschiedlicher Trägheit und/oder Amplitude geregelt, insbesondere relativ schnell / mit größerer Amplitude bei vom Düngerstreuer zur Grenze hin wehendem Wind und relativ langsam / mit kleinerer Amplitude bei von der Grenze zum Düngerstreuer hin wehendem Wind. Dadurch lässt sich ein Werfen des Düngers über die Grenze hinaus zuverlässig verhindern. Eine Verschlechterung des Streufächers auf der Feldinnenseite kann demgegenüber eher in Kauf genommen werden.

Vorzugsweise werden beim Grenzstreuen Einstellwerte der Streuscheiben, daran vorhandener Wurfschaufeln und/oder eines zugeordneten Grenzstreuschirms sowie ergänzend dazu ein Sollabstand des Streufächers zur abgefahrenen Grenze jeweils in Abhängigkeit von der Windrichtung und Windgeschwindigkeit automatisch angepasst. Abhängig von der Stärke und/oder Variabilität des Winds kann so das Risiko eines unerwünschten Werfens über die Feldgrenze hinaus reduziert werden.

Vorzugsweise werden auf der Grundlage berechneter und/oder gemessener Ist-Abwurfwinkel und Ist-Wurfweiten damit erzeugte Streufächer und/oder Querverteilungen des Mineraldüngers für die insbesondere im Bereich der Streufächer zugrunde gelegte Windrichtung und Windstärke berechnet und zugehörige kompensatorische Veränderung insbesondere in Form von Polygonen angezeigt. Dies ermöglicht eine übersichtliche und schnell erfassbare Visualisierung der kompensatorischen Regelung.

Vorzugsweise werden Überdüngung und Unterdüngung durch Farbskalierung betroffener Teilbereiche und/oder Teilbreiten in einer Karte der landwirtschaftlichen Fläche visualisiert. Dabei werden vorzugsweise Flächen vor dem Streuvorgang, nach erster Überfahrt, und nach Anschlussfahrt mit unterschiedlicher Farbskalierungen dargestellt. Beispielsweise wird eine tatsächlich ausgebrachte Menge angezeigt, welche in der Regel spätestens nach einer zweiten Überfahrt der jeweils vorgesehenen Sollmenge entsprechen sollte. Dies kann beispielsweise bei einer Anschlussfahrt oder einem zukünftig nachfolgenden Streuvorgang berücksichtigt werden. Prinzipiell könnten auch prognostizierte Mengen auf entsprechende Weise angezeigt werden.

Vorzugsweise werden bei Teilbreitenschaltung Abweichungen windbedingter Ist-Positionen von Teilbreiten TB von ihren Soll-Positionen gemessen, berechnet und/oder angezeigt und/oder die Ist-Positionen kompensatorisch angepasst. Dadurch können Anwender in anschaulicher Form Positionen, Ausdehnungen und Mengenverteilungen und/oder Schaltpunkte von Streufächern abschätzen. Die Abweichungen windbedingter Ist-Positionen von Teilbreiten TB von ihren Soll-Positionen können bei einer kompensatorischen Anpassung berücksichtigt werden.

Vorzugsweise wird eine Datenbank und/oder wenigstens eine Funktion zur Charakterisierung einer Vielzahl unterschiedlicher Ausbringsituationen und/oder Windbedingungen und/oder Streubilder vorgehalten. Ferner werden dann Ist-Abwurfwinkel und Ist-Wurfweiten auf der Grundlage des jeweils eingestellten Streubilds und des beispielsweise auf der Grundlage von Windkarten und/oder Drohnenüberflügen gemessenen / abgeschätzten Winds berechnet.

Die Anpassung des Soll-Abwurfwinkels könnte auch deaktiviert und durch Anwendung eines festgelegten Abwurfwinkels ersetzt werden, falls eine bei maximaler Windkompensation resultierende Ist-Arbeitsbreite von der Soll-Arbeitsbreite zu stark, also um mehr als ein festgelegtes oder festzulegendes Maß abweicht. Damit lässt sich die Windkompensation für den Anwender gegebenfalls nachvollziehbar auf bestimmte Regelbereiche eingrenzen.

Die gestellte Aufgabe wird auch gelöst mit einem Regelungssystem für einen Düngerstreuer mit einer Recheneinheit und wenigstens einem darin gespeicherten Programm zur kompensatorischen Regelung der Streuscheiben des Düngerstreuers samt zugehörigen Einleitsystemen gemäß dem Verfahren nach wenigstens einem der vorigen Ansprüche.

Das Regelungssystem umfasst hierzu ferner die bezüglich der entsprechenden Funktionen / Verfahrensschritte beschriebenen Komponenten, wie beispielsweise wenigstens eine Datenbank, einen Datenbus und/oder eine Funkschnittstelle, die beispielsweise die Kommunikation mit wenigstens einer Drohne zur begleitenden Windmessung ermöglichen kann. An den Datenbus kann beispielsweise ein am Düngerstreuer und/oder an einem zugehörigen Schlepper mitfahrender Windsensor angeschlossen sein.

Das Regelungssystem ist dann vorzugsweise Bestandteil eines Düngerstreuers zum Ausbringen von Dünger mittels zweier Streuscheiben.

Bevorzugte Ausführungsformen der Erfindung sind zeichnerisch dargestellt. Es zeigen:
Fig. 1A - 1C schematische Darstellungen eines Streufächers bei Windstille und unterschiedli chen Windverhältnissen;
Fig. 2A bis 2E schematische Darstellungen verschiedener Strömungssituationen bei Seitenwind;
Fig. 3 eine schematische Darstellung einer Datenbank mit Karten der landwirtschaftlichen Fläche;
Fig. 4 eine schematische Darstellung einer Visualisierung der Verteilqualität;
Fig. 5A und 5B eine schematische Darstellung von Situationen beim Grenzstreuen;
Fig. 6 eine schematische Darstellung einer Variante mit einem Überwachungssystem für erzeugte Streufächer; und
Fig. 7 eine schematische Darstellung einer Situation bei Teilbreitenschaltung.

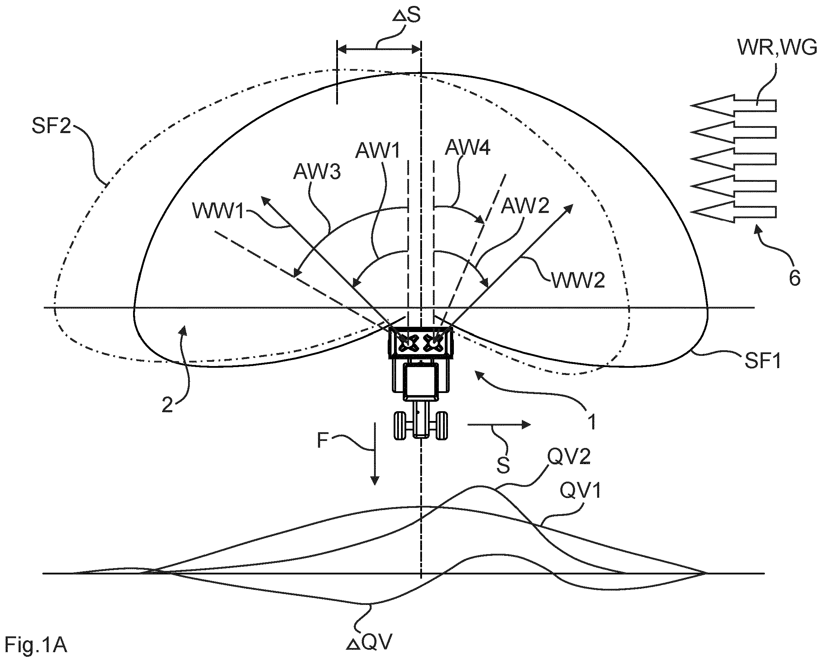

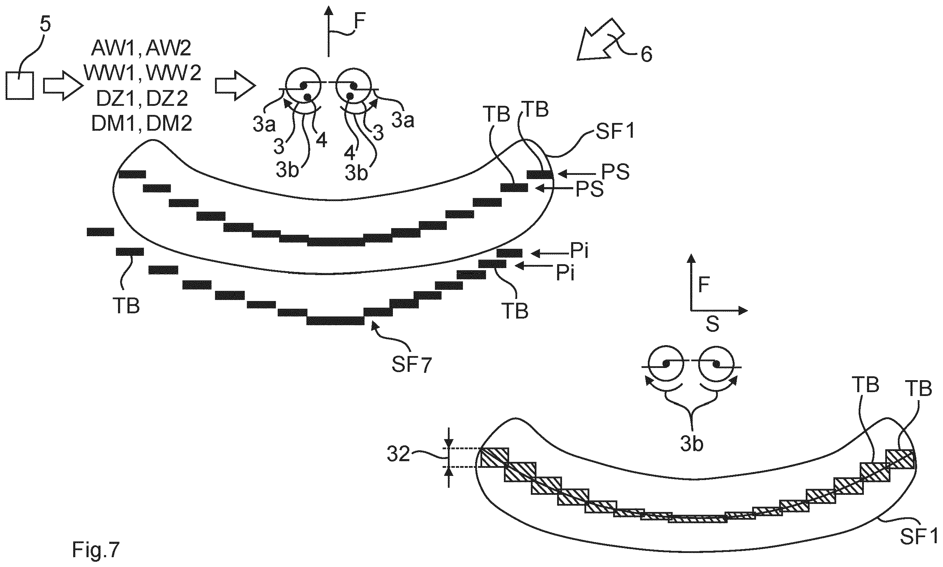

Die Fig. 1A bis 1C zeigen beispielhaft und schematisch einen Düngerstreuer 1 beim Ausbringen mineralischen Düngers 2 unter idealisierten Bedingungen bei Windstille sowie bei unterschiedlichen charakteristischen Windverhältnissen. Prinzipiell bekannte Details des Düngerstreuers 1 sind zudem in der Fig. 7 dargestellt, nämlich zwei Streuscheiben 3 mit Wurfschaufeln 3a, die in Drehrichtungen 3b rotieren. Angedeutet sind zudem die Aufgabeflächen 4, auch Aufgabepunkte genannt, von (in der Funktion prinzipiell bekannten und daher nicht dargestellten) Einleitsystemen für den Dünger 2 auf die Streuscheiben 3.

Der Düngerstreuer 1 umfasst ein elektronisches Regelungssystem 5, mit dem die Positionen der Aufgabeflächen 4 unter Vorgabe individueller Soll-Abwurfwinkel AW1, AW2 für die Streuscheiben 3 eingestellt werden, beispielsweise durch Schwenken in/entgegen der jeweiligen Drehrichtung 3b der Streuscheiben 3 und/oder durch Verschieben in radialer Richtung.

Auch können die individuellen Drehzahlen DZ1, DZ2 der Streuscheiben 3 unter Vorgabe individueller Soll-Wurfweiten WW1, WW2 mit dem Regelungssystem 5 eingestellt werden. Die von den Einleitsystemen auf die Streuscheiben 3 abgegebenen Dosiermengen DM1, DM2 des Düngers 2 lassen sich ebenso individuell einstellen. Diese grundlegenden Funktionen sind bekannt und daher nicht im Detail beschrieben.

Wie die Fig. 1A bis 1C jeweils andeuten, erzeugen die Streuscheiben 3 bei identischer Einstellung der Streuscheiben 3 und Windstille einen bezüglich Fahrtrichtung F im Wesentlichen symmetrischen ersten Streufächer SF1 des Düngers 2. Dieser wird vorzugsweise unter Vorgabe von Soll-Abwurfwinkeln AW1, AW2 und Soll-Wurfweiten WW1, WW2 erzeugt, die beispielsweise bezüglich eines Schwerpunkts der Düngerverteilung definiert sind.

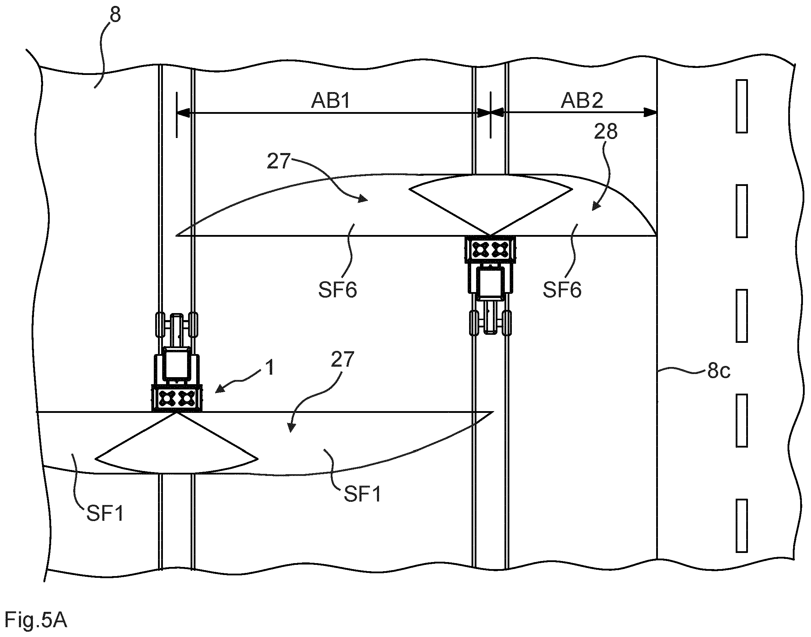

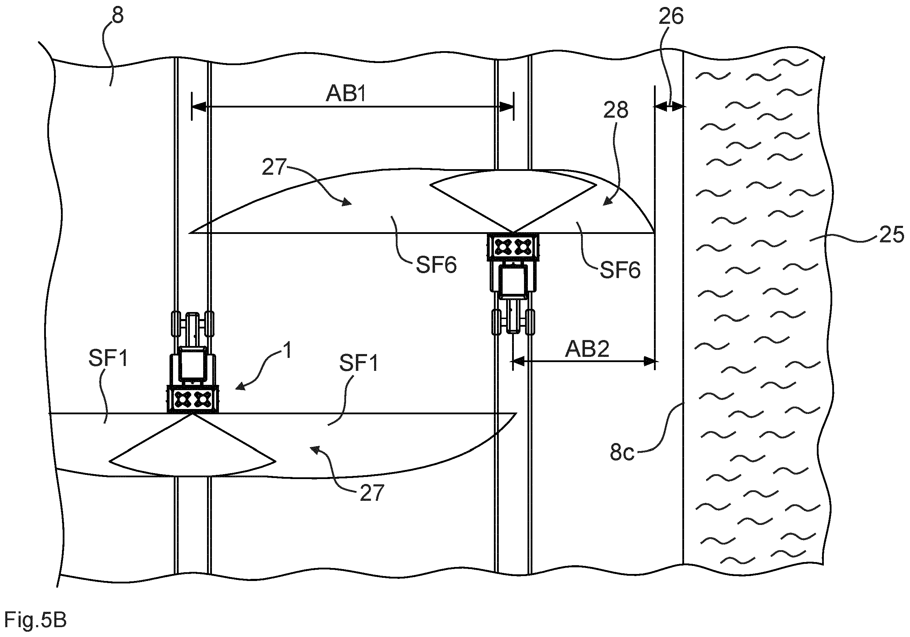

Der erste Streufächer SF1 repräsentiert ein Soll-Streubild für den Dünger 2. Der fahrende Düngerstreuer 1 erzeugt damit im Idealfall eine bezüglich der Fahrtrichtung F achsensymmetrische erste Querverteilung QV1 des Düngers 2 im Sinne einer einzuhaltenden / herzustellenden Soll-Querverteilung. Diese wird passend zu einer Soll-Arbeitsbreite AB1 (siehe Fig. 5A und 5B) erzeugt, sodass sich benachbarte erste Querverteilungen QV1, die im Feldinneren entlang äquidistant angelegter Fahrgassen erzeugt werden, zu einem möglichst horizontalen Kurvenverlauf summieren, was prinzipiell bekannt ist. Ein möglichst horizontaler Kurvenverlauf entspricht einer gleichmäßigen (homogenen) Streugutausbringung pro Flächeneinheit. Alternativ kann auch ein Kurvenverlauf gewünscht sein, der einer inhomogenen Soll-Verteilung entspricht, weil beispielsweise aufgrund zusätzlicher Bedingungen verschiedene Flächenbereiche eine unterschiedliche Sollmenge erfordern.

Die Fig. 1A zeigt beispielhaft den störenden Einfluss von Wind 6, der mit einer Windrichtung WR orthogonal zur Fahrtrichtung F weht. Die Windrichtung WR wird durch die Orientierung von Blockpfeilen und die Windgeschwindigkeit WG (Windstärke) durch deren Größe symbolisiert sind. Diese Darstellungsform wird auch an anderer Stelle beibehalten.

Der ausschließlich seitlich einfallende Wind 6 führt zu einem in seitlicher Richtung S (Querrichtung) verzerrten zweiten Streufächer SF2 und einer entsprechend verzerrten zweiten Querverteilung QV2 im Sinne einer zu kompensierenden Ist-Querverteilung. Eine dadurch verursachte Abweichung ΔQV der zweiten Querverteilung QV2 von der ersten Querverteilung QV1 ist beispielhaft als Differenzkurve dargestellt. Damit einhergehend tritt eine seitliche Verlagerung ΔS des zweiten Streufächer SF2 gegenüber dem ersten Streufächer SF1 auf.

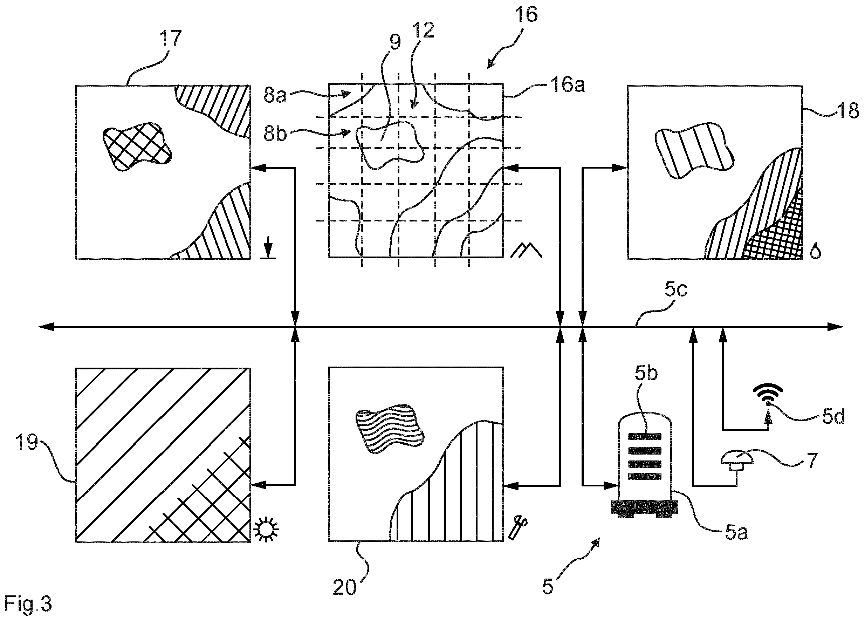

Das Regelungssystem 5 des Düngerstreuers 1 umfasst wenigstens eine (beispielhaft in der Fig. 3 dargestellte) elektronische Recheneinheit 5a mit einem Korrekturprogramm, um der durch den Wind 6 ansonsten verursachten Abweichung ΔQV der zweiten Querverteilung QV2 von der ersten Querverteilung QV1 bzw. der seitlichen Verlagerung ΔS entgegenzuwirken und insbesondere diese Abweichungen zu minimieren. Anders gesagt wird dadurch der zweite Streufächer SF2 entzerrt und möglichst an den ersten Streufächer SF1 angeglichen.

Für eine solche Korrektur des zweiten Streufächers SF2 bzw. der zweiten Querverteilung QV2 werden die Soll-Abwurfwinkel AW1, AW2 und/oder Wurfweiten WW1, WW2 kompensatorisch gegenüber ihren Standardwerten für Windstille verändert, beispielsweise durch eine aktuelle Berechnung kompensatorischer Werte für die Soll-Abwurfwinkel AW1, AW2 und/oder Wurfweiten WW1, WW2 und/oder deren Auswahl aus einer Liste zuvor berechneter kompensatorischer Werte.

Die Recheneinheit 5a des Regelungssystems 5 umfasst beispielsweise ein Korrekturprogramm, um einer durch den Wind 6 induzierten Abweichung ΔWW der Ist-Wurfweiten WW3, WW4 von den Soll-Wurfweiten WW1, WW2 entgegenzuwirken und die Abweichung ΔWW insbesondere zu minimieren.

Derartige Anpassungen sind prinzipiell gleichzeitig / überlappend möglich. Beispielsweise werden so Drehzahl und Abwurfwinkel korrigiert, wobei die Drehzahl nur mit einer systematisch bedingten Trägheit verstellt werden kann. Die Regelung kann dazu passende Filterfunktionen, beispielsweise in Formeines Totbandes, umfassen, wodurch eine ununterbrochene und zu nervöse Regelung des Streuers vermieden werden kann.

Parallel dazu kann auch die Grunddrehzahl angepasst und somit die Grundcharakteristik des Streubilds verändert werden. Insbesondere kann die Grunddrehzahl reduziert werden, beispielsweise von 900 auf 800 U/min, um anschließend einen Regelbereich von 200 U/min bis zu einer beispielhaft angenommenen Höchstdrehzahl von 1000 U/min für die Windkompensation zur Verfügung zu haben. Reicht der Spielraum (je nach Wind) wiederholt nicht aus, um gegen den Wind zu regeln, kann das Grundstreubild auf 800 U/min "umgerechnet" und dann mit dieser Grunddrehzahl gearbeitet werden.

Geeignete Korrelationen zwischen unterschiedlichen Windrichtungen und -geschwindigkeiten WR, WG und jeweils geeignet entgegenwirkenden bzw. kompensierenden Soll-Abwurfwinkeln AW1, AW2 und Soll-Wurfweiten WW1, WW2 können beispielsweise durch Streuversuche vorab ermittelt werden und/oder auf Messungen bei vorausgegangenen Streuvorgängen beruhen und/oder durch Simulation des Windeinflusses und Modellierung des Streuverhaltens ermittelt werden. Dies gilt prinzipiell auch für Korrelationen mit Scheibendrehzahlen und/oder Wurfweitenanpassungen.

Das Regelungssystem 5 kann die jeweils entgegenwirkenden / kompensierenden Werte lediglich anzeigen im Sinne eines Einstellvorschlags oder auch automatisch anwenden. Dies kann vom Ausmaß der nötigen Kompensation und/oder der jeweiligen Anwendungssituation abhängig sein, wie nachfolgend noch beispielhaft (aber nicht beschränkend) bezüglich des Grenzstreuens beschrieben ist.

Passend zu den kompensatorisch veränderten Soll-Abwurfwinkel AW1, AW2 stellt das Regelungssystem 5 dann vorrangig zuerst die Drehzahlen DZ1, DZ2 und dann zur ergänzenden Korrektur die Positionen der Aufgabeflächen 4 und gegebenenfalls auch die Stellungen der Wurfschaufeln 3a ein.

In der Fig. 1A sind ferner die Ist-Abwurfwinkel AW3, AW4 des unkompensierten zweiten Streufächers SF2 eingezeichnet, die sich allerdings mit der beschriebenen Windkompensation nicht einstellen, sondern möglichst an die Soll-Abwurfwinkel AW1, AW2 für Idealbedingungen angeglichen werden.

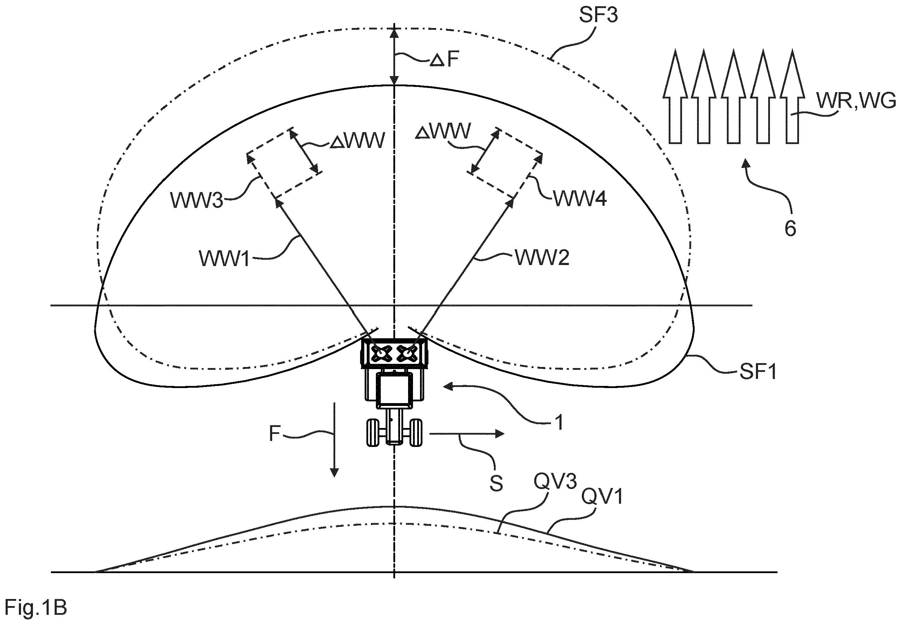

Die Fig. 1B verdeutlicht in Anlehnung an die Fig. 1A beispielhaft den störenden Einfluss von Wind 6, der mit einer Windrichtung WR parallel zur Fahrtrichtung F weht.

Der Wind 6 führt in diesem Fall zu einem entgegen der Fahrtrichtung F um eine Spreizung ΔF nach hinten verlängerten dritten Streufächer SF3, der in seitlicher Richtung S vergleichsweise gering gestaucht ist. Die Verteilungsschwerpunkte des dritten Streufächers SF3 sind parallel zur Fahrtrichtung F verlagert, woraus sich eine Abweichung ΔWW von Ist-Wurfweiten WW3, WW4 des Düngers 2 (ausgehend von der jeweiligen Streuscheibe 3) gegenüber Soll-Wurfweiten WW1, WW2 ergibt, die der Einfachheit halber am ersten Streufächer SF1 für Windstille angedeutet sind.

Durch die im Beispiel vergrößerten Wurfweiten WW3, WW4 verteilt sich der Dünger 2 über eine größere Fläche, sodass die resultierende dritte Querverteilung QV3 insgesamt flacher ausfällt als die erste Querverteilung QV1

Die Recheneinheit 5a des Regelungssystems 5 umfasst ferner ein Korrekturprogramm, um einer solchen durch den Wind 6 induzierten Abweichung ΔWW der Ist-Wurfweiten WW3, WW4 von den Soll-Wurfweiten WW1, WW2 bei den Ein- und Ausschaltpunkten (bei Aus- und Einfahrt ins Vorgewende) Rechnung zu tragen. Dabei wird bei Wind von Vorne die Position des Ausschaltpunktes weiter von dem Feldinneren entfernt. Der Einschaltpunkt wird weiter in das Feld hinein verschoben, entsprechend der Berechneten Verschiebung in Fahrtrichtung durch den Wind.

Das Regelungssystem 5 kann die korrigierten Schaltpunkte lediglich anzeigen / vorschlagen oder auch automatisch anwenden. Dies kann vom Ausmaß der nötigen Kompensation und/oder der jeweiligen Anwendungssituation abhängig sein, wie beispielhaft (aber nicht beschränkend) bezüglich einer Teilbreitenschaltung beschrieben ist.

Passend zu den kompensatorisch veränderten Soll-Wurfweiten WW1, WW2 stellt das Regelungssystem 5 dann beispielsweise die Drehzahlen DZ1, DZ2 der Streuscheiben 3 und die Positionen der Aufgabeflächen 4 und/oder die Stellungen der Wurfschaufeln 3a ein. Beispielsweise geht man von der Drehzahl / Wurfweite aus und bestimmt dazu die Wurfrichtung. Jedoch werden beide Werte in der Regel in Echtzeit und somit parallel berechnet. Die Bevorzugung der Wurfweite als Ausgangspunkt liegt in einer grundsätzlichen Interpretation von Streubildern begründet, bei der die Wurfweite meist als "semi-konstant" angesehen wird.

Für entgegengesetzt wehenden Wind 6, also Rückenwind, gilt die oben beschriebene Vorgehensweise analog, im Prinzip lediglich mit umgekehrten Vorzeichen betreffend die Verschiebung von Ein- und Ausschaltzeitpunkten.

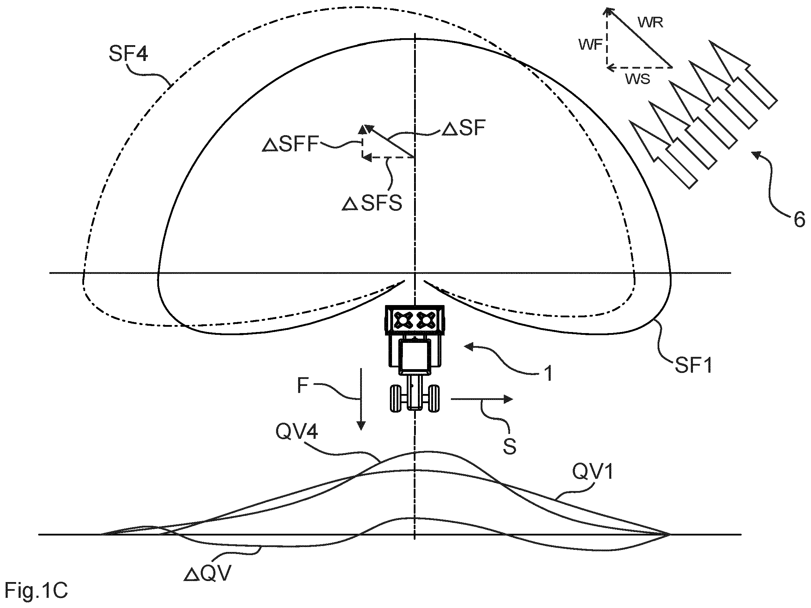

Die Fig. 1C zeigt beispielhaft den störenden Einfluss eines aus beliebiger Richtung schräg einfallenden Winds 6, der sich folglich aus einer zur Fahrtrichtung F orthogonalen Seitenkomponente WS und einer zur Fahrtrichtung F parallelen Fahrtrichtungskomponente WF zusammensetzt.

Der Wind 6 verursacht dann einen in seitliche Richtung S verzerrten vierten Streufächer SF4, der zudem merklich entgegen der Fahrtrichtung F verlagert / gespreizt ist. Der vierte Streufächer SF4 führt zu einer entsprechend verzerrten vierten Querverteilung QV4 im Sinne einer zu kompensierenden Ist-Querverteilung. Eine dadurch verursachte Abweichung ΔQV der zweiten Querverteilung QV4 von der ersten Querverteilung QV1 (Soll-Querverteilung) ist wiederum als Differenzkurve beispielhaft veranschaulicht.

Die Verlagerung des vierten Streufächers SF4 bedeutet zudem eine Abweichung ΔWW tatsächlicher Ist-Wurfweiten WW3, WW4 des Düngers 2 gegenüber seinen Soll-Wurfweiten WW1, WW2 (ähnlich der Fig. 1B, daher nicht nochmals dargestellt).

Vorzugsweise wird eine Verlagerung ΔSF des mit den Streuscheiben 3 unter Windeinfluss erzeugten vierten Streufächers SF4 gegenüber dem ohne Windeinfluss erzeugten Streufächer SF1 ermittelt. Hierfür kann beispielsweise die aus der Windrichtung WR und der Windgeschwindigkeit WG des Winds 6 resultierende Streubildverlagerung ΔSF der jeweiligen Verteilungsschwerpunkte (hier der Streufächer SF1 bis SF4) berechnet werden. Die Verlagerung ΔSF wird dann in eine zur Fahrtrichtung F orthogonale Seitenkomponente ΔSFS und eine zur Fahrtrichtung F parallele Fahrtrichtungskomponente ΔSFF zerlegt.

Besonders paraktikabel ist es dann, die Abweichung der Ist-Wurfweite ΔWW und/oder der Streubildverlagerung ΔSF auf der Grundlage ihrer Seitenkomponente ΔSFS kompensatorisch zu reduzieren, beispielsweise ohne oder mit geringer gewichteter Berücksichtigung der zugehörigen Fahrtrichtungkomponente ΔSFF.

Die kompensatorische Anpassung der Soll-Abwurfwinkel AW1, AW2 wird dagegen vorzugsweise auf der Grundlage der Verlagerung ΔSF insgesamt berechnet.

Zur derartigen Reduzierung / Minimierung der Abweichungen ΔQV und/oder ΔWW und/oder ΔSF kann der jeweils zu kompensierende Windeinfluss 6 vom Regelungssystem 5 ergänzend oder alternativ auch vektoriell in eine zur Fahrtrichtung F orthogonale Seitenkomponente WS (entsprechend orthogonalem Seitenwind) des Winds 6 und in eine zur Fahrtrichtung F parallele Fahrtrichtungskomponente WF (entsprechend parallelem Gegenwind oder Rückenwind) des Winds 6 zerlegt werden.

Die vektorielle Zerlegung ist in der Fig. 1C schematisch und beispielhaft sowohl für die Streubildverlagerung ΔSF als auch für die Windrichtung WR angedeutet. Demnach ergibt sich aus der Windrichtung WR des Winds 6 das jeweilige Größenverhältnis der Seitenkomponente WS und der Fahrtrichtungskomponente WF zueinander. Die Windgeschwindigkeit WG (Windstärke) des Winds 6 wirkt sich selbstverständlich gleichermaßen auf die absoluten Werte der Seitenkomponente WS und der Fahrtrichtungskomponente WF aus. Die Komponenten ΔSFS, ΔSFF der Streubildverlageung ΔSF ergeben sich direkt aus deren vektrorieller Zerlegung.

Die kompensatorische Anpassung der Soll-Abwurfwinkel AW1, AW2 und der Soll-Wurfweiten WW1, WW2 erfolgt dann vorzugsweise mit überwiegender Gewichtung oder vollständig auf der Grundlage der Seitenkomponente ΔSFS (gegebenfalls WS). Kompensatorische Anpassungen in/entgegen Fahrtrichtung erfolgen dagegen vorzugsweise durch Anpassung von Schaltzeitpunkten (Ein/Aus).

Im Prinzip lässt sich im Regelungssystem 5 ein modulares Korrekturprogramm vorhalten, dass insbesondere auf der Grundlage der vektoriellen Verlagerungszerlegung und/oder Windzerlegung in die zur Fahrtrichtung F orthogonale Seitenkomponente ΔSFS, WS und die zur Fahrtrichtung F parallele Fahrtrichtungskomponente ΔSFF, WF relativ einfach und flexibel an unterschiedliche Anwendungssituationen im Feldinneren, am Feldrand, bei Teilbreitenschaltung, im Bereich von Vorgewenden oder dergleichen angepasst werden kann.

Hierbei gilt vorzugsweise die Prämisse, dass in Seitenrichtung ausschließlich oder vorrangig eine Streubildkorrektur (Kompensation der seitlichen Streubildverlagerung) und in Fahrtrichtung ausschließlich oder vorrangig eine Schaltpunktkorretur (Kompensation der Streubildverlagerung in/entgegen Fahrtrichtung) vorgenommen wird.

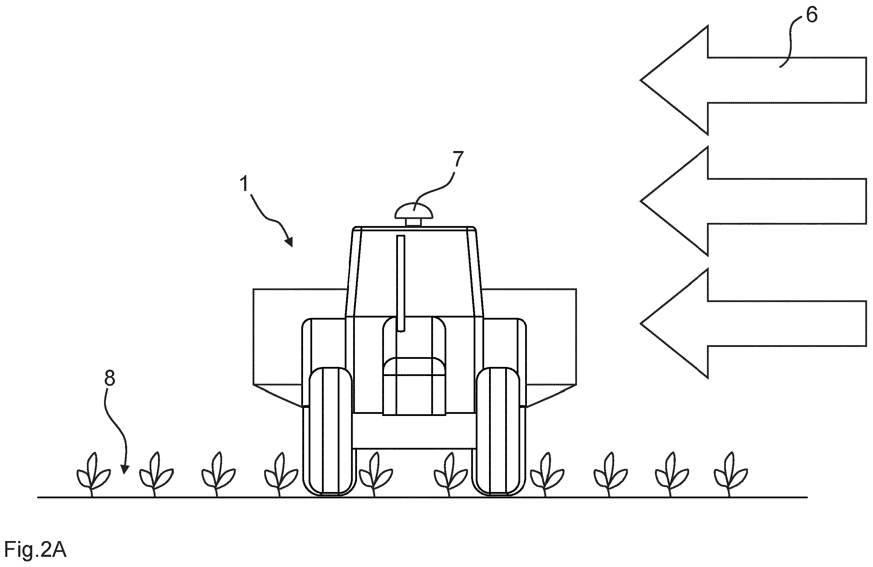

In der Fig. 2A ist schematisch angedeutet, dass der beliebig einfallende Wind 6 auf prinzipiell bekannte Weise laufend im Bereich des Düngerstreuers 1, also von einem am Düngerstreuer 1 oder einem zugeordneten Schlepper angeordneten Windsensor 7, überwacht werden kann, der die jeweilige Windrichtung WR und Windgeschwindigkeit WG misst.

Bei der Berücksichtigung von Windverhältnissen beim Ausbringen von Dünger 2 wurde bisher vereinfachend von räumlich weitgehend einheitlichem und im Wesentlichen laminar strömendem Wind 6 über der zu bearbeitenden landwirtschaftlichen Fläche 8 ausgegangen. Dies ist in der Figur 2A durch identisch ausgerichtete und dimensionierte Blockpfeile zur Darstellung des Winds 6 schematisch angedeutet.

Man nimmt zudem vereinfachend an, dass jeweils die mit dem Windsensor 7 gemessene Windrichtung WR und Windgeschwindigkeit WG identisch ist mit derjenigen im (gesamten) Bereich des angestrebten Streufächers SF1. Entsprechend gehen die gemessene Windrichtung WR und Windgeschwindigkeit WG gegebenenfalls nach geeigneter Messwertbearbeitung wie Mittelung und/oder Filterung bisher direkt in Berechnungen zur Windkompensation ein.

Die beschriebene vektorielle Zerlegung der Streubildverlagerung ΔSF und/oder der Windrichtung WR in die Seitenkomponente WS und die Fahrtrichtungskomponente WF ist auf dieser Grundlage möglich und auch prinzipiell vorteilhaft. Ergänzend oder alternativ ist eine verbesserte Windkompensation ist jedoch auch durch Berücksichtigung einer Windbeeinflussung durch topografische Merkmale 9 im Bereich der landwirtschaftlichen Fläche 8 möglich, wie nachfolgend beispielhaft beschrieben ist.

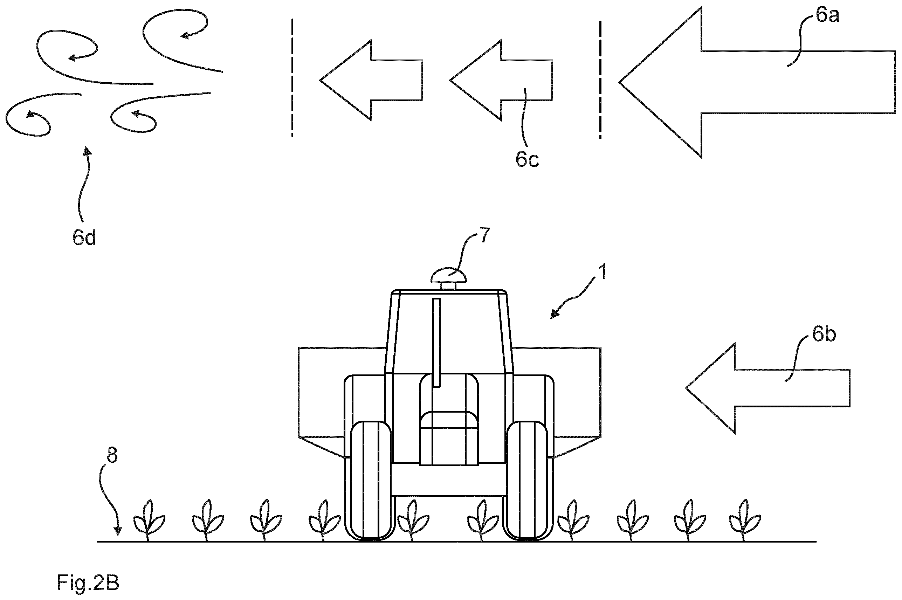

Demnach verdeutlicht die Fig. 2B schematisch, dass die jeweils zu berücksichtigenden Windverhältnisse sowohl qualitativ als auch quantitativ starken Schwankungen unterworfen sein können. Dargestellt ist beispielhaft ein gleichmäßig starker Wind 6a, ein gleichmäßig schwacher Wind 6b, ein böig auffrischender Wind 6c und ein verwirbelter Wind 6d, bei dem beispielsweise von einer lokal schwankenden Windrichtung WR ausgegangen werden kann.

Während zeitliche Schwankungen zwischen solchen Windverhältnissen prinzipiell mit dem Windsensor 7 erfasst und rechnerisch berücksichtigt werden könnten, bleiben deren räumliche Schwankungen über der landwirtschaftlichen Fläche 8 bisher in der Regel unberücksichtigt.

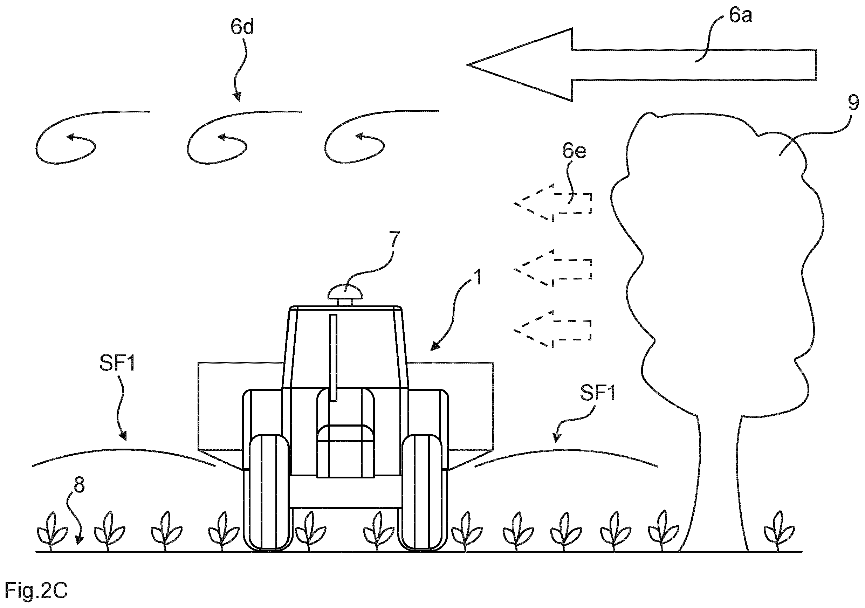

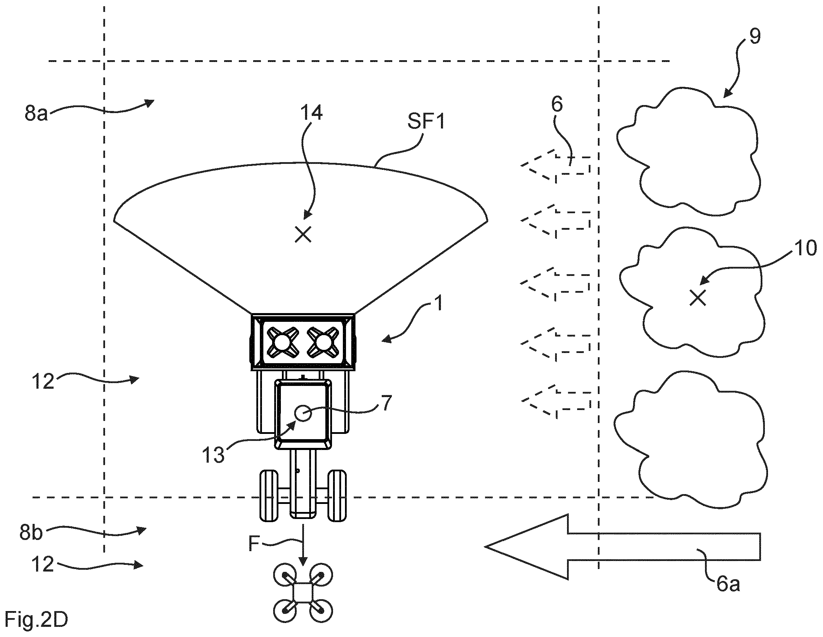

Wie die Fig. 2C und 2D diesbezüglich andeuten, können topografische Merkmale 9 im Bereich der zu bearbeitenden landwirtschaftlichen Fläche 8 die lokalen Windverhältnisse über dem angestrebten Streufächer SF1 erheblich beeinflussen und auch gegenüber den mit dem Windsensor 7 erfassten Windverhältnissen verändern.

Als Beispiel ist ein topografisches Merkmal 9 in Form einer Baumreihe dargestellt, über der ein gleichmäßiger starker Wind 6a weht. Hinter den Baumkronen entsteht beispielsweise zum einen ein oberer Bereich mit turbulent strömendem, also verwirbeltem Wind 6d und zum anderen ein unterer Bereich mit einem (durch gestrichelte Blockpfeile angedeuteten) Windschatten 6e, der für den Streufächer SF1 in der dargestellten Situation ausschlaggebend ist und daher vorübergehend den zu kompensierenden Wind 6 darstellt. Ähnliche Windverhältnisse könnten sich beispielsweise neben Gebäuden ergeben.

Topografische Merkmale 9 bilden in erster Linie Windhindernisse aus und haben daher meist einen strömungsmindernden Einfluss auf den Bereich des Streufächers SF1, gegebenenfalls auch gegenüber den mit dem Windsensor 7 erfassten Windverhältnissen.

Der aktuelle Strömungseinfluss einzelner topographischer Merkmale 9 kann auf der Grundlage vorheriger Fahrten und Windmessungen mit dem Düngerstreuer 1 abgeschätzt werden oder während der aktuellen Fahrt, indem die Windverhältnisse bei Annäherung an ein bestimmtes topografisches Merkmal 9, beim Erreichen und/oder Zurücklassen desselben in den einzelnen Fahrgassen überwacht und ausgewertet werden. Daraus kann dann auf die im Bereich des topografischen Merkmals 9 bei der nächsten Annäherung (in einer anderen Fahrgasse) zu erwartenden Windverhältnisse geschlossen werden. Die beschriebene Windkompensation kann dann auf diese Weise passend zur Topografie vorausschauend vorgenommen werden.

Einzelnen Teilbereichen 8a, 8b der landwirtschaftlichen Fläche 8 und/oder geografischen Positionen 10 von topographischen Merkmalen 9 können beispielsweise Windkoeffizienten 12 zugeordnet werden, die den strömungsverändernden Einfluss der topographischen Merkmale 9 in Abhängigkeit von der Windrichtung WR, beispielsweise der Hauptwindrichtung, und gegebenenfalls abhängig von der zugehörigen Windgeschwindigkeit WG angeben.

Ausgehend von der auf bekannte Weise laufend überwachten geografischen Position 13 des Düngerstreuers 1 und/oder des Windsensors 7 kann anhand der Fahrtrichtung F wenigstens eine geografische Position 14 des Streufächers SF1 oder von Teilbereichen des Streufächers SF1 ermittelt werden. Die geografische Position 14 kann sich beispielsweise jeweils auf einen Schwerpunkt der Düngerverteilung im Streufächer SF1 beziehen.

Befindet sich der Streufächer SF1 bzw. dessen geografische Position 14 in einem bestimmten Teilbereich 8a, 8b der landwirtschaftlichen Fläche 8 und/oder im Bereich einer geografischen Position 10 eines bestimmten topografischen Merkmals 9, so fließt der dort jeweils zugeordnete Windkoeffizient 12 in die Berechnung des Winds 6 und damit in die beschriebene Windkompensation ein.

Die angewendeten Windkoeffizienten 12 könnten hierbei laufend hinsichtlich der Windverhältnisse aktualisiert werden, beispielsweise auf der Grundlage von Windmessungen mit dem Windsensor 7 und/oder einer die landwirtschaftliche Fläche 8 überfliegenden Drohne 15 und/oder auf der Basis von extern erhobenen Wetterdaten.

Beispielsweise könnte im Regelungssystem 5 jedem Teilbereich 8a, 8b ein Satz mit Windkoeffizienten 12 zugeordnet werden, aus dem dann der jeweils am besten zur aktuellen Windrichtung WR und/oder Windgeschwindigkeit WG bzw. aktuellen Bewegungsrichtung und/oder -geschwindigkeit des Düngerstreuers 1 passende Windkoeffizient 12 ausgewählt und angewendet wird. Das heißt, die topografischen Merkmale 9 können sich in Form der Windkoeffizienten 12 je nach herrschenden Hauptwindverhältnissen unterschiedlich stark auf die Windrichtung WR und Windstärke WS des Winds 6 auswirken, der für die Berechnung der Windkompensation angenommen wird und dieser folglich zugrunde liegt. Andere maschinelle Berechnungsverfahren oder Auswahlverfahren sind jedoch ebenso denkbar.

Es ist auch möglich örtliche Änderungen der Windrichtung WR und/oder Windgeschwindigkeit WG beispielsweise mit dem Windsensor 7 beim Entlangfahren an einem topografischen Merkmal 9 in einer Fahrgasse zu überwachen und beim Entlangfahren am selben topografischen Merkmal 9 in einer benachbarten Fahrgasse von ähnlichen örtlichen Änderungen auszugehen. Es wird dann beispielsweise angenommen, dass ein topografischen Merkmal 9 je nach Abstand zur jeweiligen Fahrgasse einen mehr oder weniger stark einwirkenden Windschatten verursacht. Zudem kann der diesbezügliche Einfluss je nach Änderung der Windrichtung WR laufend abgeschätzt werden.

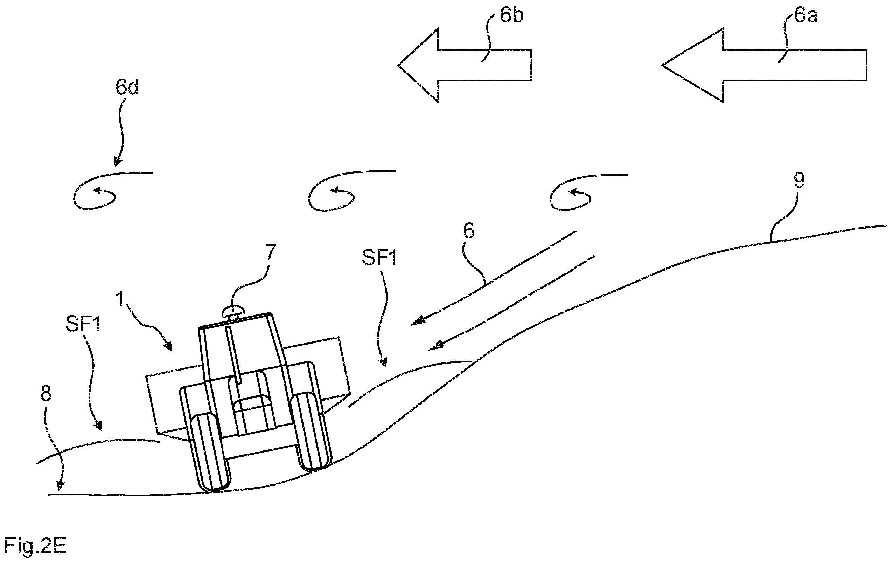

Wie die Fig. 2E beispielhaft und stark vereinfachend andeutet, könnte ein topografisches Merkmal 9 auch einen strömungsverstärkenden Einfluss auf den Bereich des Streufächers SF1 haben, gegebenenfalls auch gegenüber den mit dem Windsensor 7 erfassten Windverhältnissen. Demnach kann es sich bei dem topografischen Merkmal 9 beispielsweise um einen Abhang, einen Hügel oder eine Scharte mit lokaler Windverstärkung oder dergleichen handeln.

Der Windsensor 7 könnte dann je nach Relativposition zum topografischen Merkmal 9 den relativ schwach laminar strömenden Wind 6b, den relativ stark laminar strömenden Wind 6a (hier ein Fallwind), den turbulent strömenden Wind 6d oder eine Mischung davon messen. Der für den Bereich des herzustellenden Streufächers SF1 maßgebliche Wind 6 könnte sich davon unterscheiden und in Kenntnis der relativen geografischen Position von Streufächers SF1 und topografischem Merkmal 9 zueinander korrigiert werden.

Zudem können sich topografische Merkmale 9 je nach herrschender Hauptwindrichtung unterschiedlich auf den für den Streufächer SF1 maßgeblichen Wind 6 auswirken, also beispielsweise einen Windschatten 6e verursachen, Verwirbelungen oder auch besonders starke Windströmungen.

Die Fig. 3 zeigt ein Beispiel, wie die Windkoeffizienten 12 und/oder anderweitige die Umgebungsbedingungen im Bereich der landwirtschaftlichen Fläche 8 charakterisierende Daten im Regelungssystem 5 verwaltet und angewendet werden können. Beispielsweise können die Windkoeffizienten 12 einer Windkarte 16 zugeordnet werden, die einer topografischen Karte 16a überlagert ist, um die Windkoeffizienten 12 Teilbereichen 8a, 8b der landwirtschaftlichen Fläche 8 und/oder geografischen Positionen 10 der topografischen Merkmale 9 zuzuordnen.

Das Regelungssystem 5 umfasst dann beispielsweise wenigstens eine Recheneinheit 5a, eine Datenbank 5b, einen Datenbus 5c und eine Funkschnittstelle 5d, die beispielsweise die Kommunikation mit wenigstens einer Drohne 15 zur begleitenden Windmessung und/oder mit externen Systemen ermöglicht. An den Datenbus 5b ist dann ferner wenigstens ein am Düngerstreuer 1 und/oder an einem zugehörigen Schlepper mitfahrender Windsensor 7 angeschlossen.

Ferner können an den Datenbus 5c zusätzliche Karten oder dergleichen Datenformate betreffend die zu bearbeitende landwirtschaftliche Fläche 8 angeschlossen sein. Beispielhaft dargestellt sind derart angebunden eine Applikationskarte 17 beispielsweise mit ortsspezifischen Soll-Streumengen und applizierten Ist-Streumengen des Düngers 2, eine Niederschlagskarte 18 mit historischen und/oder prognostizierten örtlichen Niederschlagsmengen, eine Sonneneinstrahlungskarte 19 mit historischen und/oder prognostizierten örtlichen Sonnenstunden, und eine Einstellungskarte 20 mit ortsspezifischen Einstellparametern des Düngerstreuers 1.

Die Drohne 15 kann beim Befliegen der landwirtschaftlichen Fläche 8 die Windrichtung WR und die Windgeschwindigkeit WG messen und an das Regelungssystem 5 übermitteln. Mittels solcher Daten können Rechenmodelle, die den ortsspezifischen Wind 6 abhängig von der Topografie und herkömmlichen Windkarten ermitteln, validiert und verbessert werden.

Außerdem kann die Drohne 15 die landwirtschaftlichen Fläche 8 vor der Düngerapplikation abfliegen. Dadurch lässt sich feststellen, ob bei der geplanten Applikation, das heißt mit dem auszubringenden Dünger 2, der gewählten Streuscheibe 3 und den vorgenommenen Einstellungen bei den aktuell gemessenen Windverhältnissen eine Düngung mit ausreichender Verteilqualität möglich ist, beispielsweise durch Abschätzung der zu erwartenden Variationskoeffizienten, oder ob die Applikation / das Ausbringen des Düngers 2 zumindest in Teilbereichen der landwirtschaftlichen Fläche 8 verschoben werden sollte.

Außerdem können auf der Grundlage eines Drohnenflugs an den aktuellen Wind 6 angepasste Einstellungen empfohlen und gegebenenfalls an den Düngerstreuer 1 übermittelt werden, beispielsweise um bei starkem Wind 6 größere Bereiche mit Streuüberlappungen zu erzeugen. Auch kann die Drohne 15 dem Düngerstreuer 1 direkt vorausfliegen, um dessen Einstellungen während der Fahrt an aktuelle Winddaten anzupassen.

Es könnte auch ein Schwarm aus zwei oder mehr Drohnen 15 eingesetzt werden, die den Wind 6 in einem Raum um den und/oder unmittelbar vor dem aktuellen Streubild / Streufächer SF1 räumlich erfassen und diese Winddaten zur genaueren Steuerung des Düngerstreuers 1 an sein Steuersystem 5 und insbesondere die Recheneinheit 5a oder dergleichen Jobrechner übermitteln.

Mit der Datenbank 5b und/oder kartografischen Daten aus der topografischen Karte 16, der Applikationskarte 17, der Niederschlagskarte 18, der Sonneneinstrahlungskarte 19 und/oder der Einstellungskarte 20 sind umfangreiche Applikationsauswertungen, Applikationsprognosen und Einstellempfehlungen möglich.

Beispielsweise können die aufgezeichneten Daten während oder nach einer Streusaison in Form eines Windtagebuchs dargestellt werden, bei dem die Winddaten und gegebenenfalls damit verknüpfte Applikationsdaten in Tages- und/oder Wochenberichten zusammengefasst werden. Beispielsweise könnte darin angegeben werden, welcher Anteil der Streuzeit eines Tages hinsichtlich der Windverhältnisse unkritisch war. Werden zudem Daten des Düngers 2 und Einstelldaten des Düngerstreuers 1 berücksichtigt, kann das Windtagebuch zu einem Streuqualitätstagebuch erweitert werden. Beispielsweise könnte darin angegeben werden, welcher Anteil der Streuzeit eines Tages hinsichtlich der Streuqualität unkritisch war.

Die Aussagekraft solcher Tagebücher kann erhöht werden, wenn die topografischen Merkmale 9 im Bereich der landwirtschaftlichen Fläche 8 berücksichtigt wird und/oder aktuelle Daten, wie Wind-/Wetterdaten und Einstell-/Ausbringdaten mit solchen von zurückliegenden und insbesondere korrespondierenden Ausbringvorgängen / Applikationen ergänzt werden.

Weiterhin können Windbedingungen und Streuqualitäten für die landwirtschaftliche Fläche 8 datums-/ saisonabhängig, tageszeitspezifisch und/oder hinsichtlich regionaler meteorologischer Besonderheiten ausgewertet werden.

Dadurch wird dem Anwender die Möglichkeit gegeben, seine Streuplanung für eine Saison oder einen Teil der Saison mit Hilfe historischer Daten der oben genannten Art zu optimieren. So können Empfehlungen gegeben werden, welcher Dünger 2 wann und auf welcher Fläche 8 ausgebracht werden sollte, um windbedingten Verschlechterungen der Verteilqualität vorzubeugen und/oder diese zu minimieren. Dies ermöglicht auch eine Qualitätsoptimierung über mehrere zu bearbeitende landwirtschaftliche Flächen 8 im Mittel.

Derartige historische Daten können auch ergeben, dass ein bestimmter Dünger 2 hinsichtlich des Ausbringungszeitraums und/oder der Verteilqualität flexibler einsetzbar ist und/oder zu besseren Ergebnissen führt als andere Dünger. Ergebnis kann beispielsweise sein, dass ein bestimmte Dünger 2 in bestimmten saisonalen Zeiträumen möglichst zu einer bestimmten Uhrzeit gestreut werden sollte, und/oder dass bestimmte Dünger 2 früher oder später in der Saison ausgebracht werden sollten.

Das Regelungssystem 5 ermöglicht somit auch Streuwetterprognosen und/oder eine zielgerichtete Einsatzplanung für die landwirtschaftliche Fläche 8. Derartige Prognosen zur Streuqualität können für unterschiedliche landwirtschaftlichen Flächen 8 und Zeiträume dazu genutzt werden, eine Streusaison hinsichtlich der Verteilqualität vorausschauend zu optimieren. Beispielsweise können jeweils Fruchtsorte, Düngersorte und zugeordnete Streuparameter in dieser Hinsicht geplant werden.

Mit Hilfe einer regionalen Windvorhersage kann für die landwirtschaftlichen Fläche 8 und einen bestimmten Zeitraum unter Berücksichtigung des Typs und charakteristischer Eigenschaften des Düngers 2 beispielsweise eine Verteilqualität bei einer bestimmten Arbeitsbreite AB1 prognostiziert werden. Die Prognose kann verfeinert werden, wenn ferner Einstellwerte des Düngerstreuers 1, die jeweiligen Fahrtrichtungen F und/oder die Topografie in der im Zusammenhang mit der Erfindung beschriebenen Weise berücksichtigt werden.

In die Planung können auch Prognosen zu Temperatur, Sonneneinstrahlung, Niederschlag und/oder Luftfeuchtigkeit einfließen, beispielsweise auf der Grundlage oben genannter Karten, da diese Umgebungsbedingungen die physikalischen Eigenschaften bestimmter Dünger 2 und damit die Streuergebnisse substanziell beeinflussen.

Um eine herkömmliche Grobplanung basierend auf Hauptwindrichtung und Hauptwindstärke hinsichtlich der Planung und der Kompensation des Windes 6 zu verfeinern, wird vorzugsweise die Topographie der landwirtschaftliche Fläche 8 berücksichtigt, also geografische Positionen 10 diesbezüglich relevanter topografischer Merkmale 9. Auch Prognosen zur Temperatur und Sonneneinstrahlung sind hierzu gegebenenfalls hilfreich, ebenso aktuelle Wetterdaten, die beispielsweise Wahrscheinlichkeiten und Stärken möglicher Windböen umfassen können.

Eine Auswertung historischer Wetterdaten, insbesondere des Niederschlags, für die landwirtschaftliche Fläche 8 kann Aufschluss über die Aufnahme der bei einem saisonal gesehen ersten Streuvorgang verteilten Nährstoffe durch den Boden geben. Dabei können Verluste abgeschätzt werden, die entstehen, wenn die gegebene Nährstoffmenge aufgrund der beim Streuvorgang herrschenden Witterung nicht optimal vom Boden aufgenommen werden konnte. Beispielsweise lässt sich abschätzen, in welchem Ausmaß die gegebenen Nährstoffe in eine für die jeweiligen Pflanzen nutzbare Form umgesetzt wurden, was beispielsweise von der verfügbaren Feuchtigkeitsmenge abhängen kann. Solche Verluste können bei der Planung eines nachfolgenden Streuvorgangs berücksichtigt werden. Aus aufgezeichneten Wetterdaten lässt sich zudem ableiten, wie häufig derartige Verluste zu erwarten sind. Dies kann bei einer Planung zusätzlich erforderlicher Nährstoffmengen berücksichtigt werden.

Die Anfälligkeit von Streuvorgängen für Windeinflüsse hängt sowohl vom Dünger 2 als auch von der Arbeitsbreite AB1 und/oder Wurfweite WW1, WW2 ab. Prinzipiell sind große Arbeitsbreiten AB1 und/oder Wurfweiten WW1, WW2 anfälliger als kleine, leichter Dünger 2 anfälliger als schwerer. Anhand von Wetterprognosen kann bereits bei der Planung eines Streuvorgangs abgeleitet werden, ob dieser bei den zu erwartenden Umgebungsbedingungen mit der erforderlichen Streuqualität durchführbar ist. Das Regelungssystem 5 kann Anwendern eine diesbezügliche Risikobewertung beispielsweise in Form einer Ampel an einem Bord-Bildschirm oder einem mobilen Endgerät anzeigen.

Auch weitere der beschriebenen Abhängigkeiten können bei einer solchen Risikobewertung berücksichtigt werden. Mithilfe derartiger Bewertungen kann eine Jahresprognose erstellt und der optimale saisonale Zeitraum für einen Streuvorgang ermittelt werden.

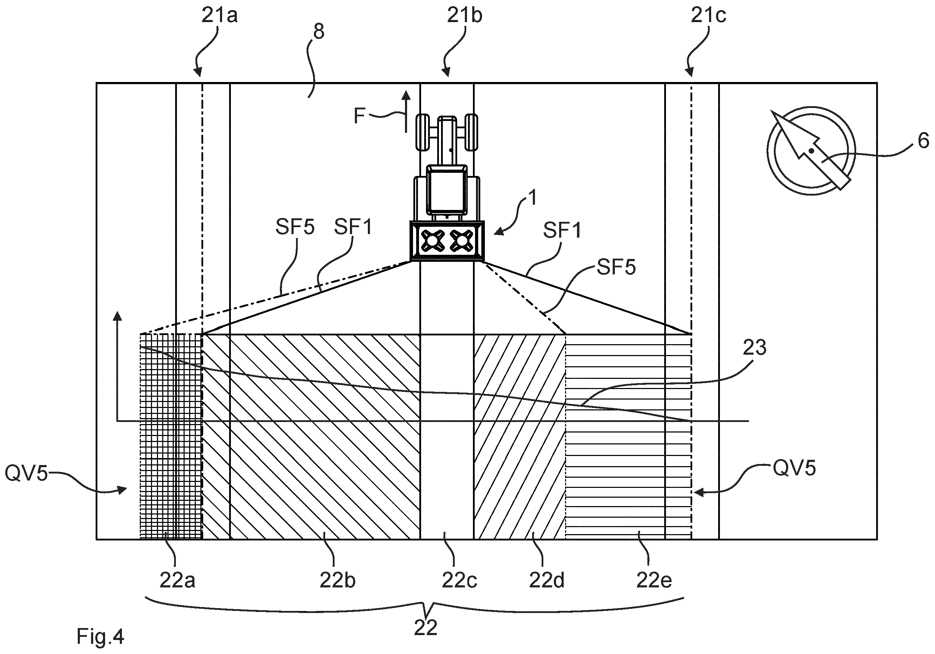

Die Fig. 4 verdeutlicht eine mögliche Visualisierung der Verteilqualität / Streuqualität bei Windeinfluss beispielsweise an einem Bord-Bildschirm des Düngerstreuers 1 / zugehörigen Schleppers oder an einem mobilen Endgerät auf der Grundlage des Regelungssystems 5.

Dargestellt sind beispielhaft drei Fahrgassen 21a, 21b, 21c die im Inneren der landwirtschaftliche Fläche 8 auf bekannte Weise äquidistant angelegt sind. Der beabsichtigte erste Streufächer SF1 ist schematisch in Form eines zur Fahrtrichtung F achsensymmetrischen Trapezes dargestellt, ein durch die Seitenkomponente WS des Winds 6 demgegenüber in seitlicher Richtung S verzerrter fünften Streufächer SF5 als entsprechend asymmetrisches Trapez.

Eine durch die Fahrtrichtungskomponente WF des Winds 6 verursachte Verlagerung des fünften Streufächers SF5 zum Düngerstreuer 1 hin kann bei der beispielhaft dargestellten Situation vernachlässigt werden und ist daher nicht dargestellt.

Demnach erstreckt sich das ideale Streubild / der ideale Streufächer SF1 beim Befahren der (hier) mittleren Fahrgasse 21b in der idealisierten Visualisierung des Streuvorgangs zwischen den Mitten der jeweils benachbarten Fahrgassen 21a, 21c.

Im Beispiel der Fig. 4 wurde die linke Fahrgasse 21a bei einer vorangegangenen Fahrt mit dem idealen Streufächer SF1 bearbeitet. Dies kann beispielsweise bei idealen Windverhältnissen oder mit der beschriebenen Windkompensation erfolgt sein. Bei der Bearbeitung entlang der mittleren Fahrgasse 21b weht der Wind 6 mit überwiegender Seitenkomponente WS und resultiert ohne Windkompensation in einer entsprechend verzerrten Querverteilung QV5 des Düngers 2. Hierbei überlagern sich die Streufächer SF1 (aus vorheriger Überfahrt), SF5 (aus aktueller Überfahrt) auf der linken Seite des Düngerstreuers 1. Die rechte Fahrgasse 21c ist dagegen noch unbearbeitet.

Die Querverteilung QV5 kann flächig durch Farbgebung und/oder Muster voneinander unterscheidbare Streumengenklassen 22 übersichtlich und somit vom Anwender schnell erkennbar dargestellt werden. Im Bespiel wird zwischen den Klassen "erheblich zu viel" 22a, "zu viel" 22b, "im Soll" 22c, "zu wenig" 22d und "erheblich zu wenig" 22d unterschieden. Hierbei kann bei der Klassifizierung und Visualisierung automatisch berücksichtigt werden, ob eine benachbarte Fahrgasse 21a, 21c bereits befahren wurde oder nicht. Prinzipiell sind jedoch beliebige Klassifizierungen zur Visualisierung denkbar, gegebenenfalls auch auf der Grundlage simulierter / virtueller Fahrten, hier beispielsweise entlang der Fahrgasse 21c. Eine Klassifizierung "im Soll" wird vorzugsweise nur für solche Bereiche angegeben, für die bereits eine Anschlussfahrt erfolgt ist, da sich Soll/Ist-Mengen in der Regel aus der Überlagerung von Anschlussstreubildern ergeben.

Wären die Windverhältnisse beim sukzessiven Befahren benachbarter Fahrgassen 21a, 21b, 21c konstant, ergäbe sich trotz wechselnder Fahrtrichtung F im Idealfall stets eine identische windbedingte Querverzerrung des idealen Streufächers SF1 (in Himmelsrichtungen gesehen). Die Asymmetrie der fünften Querverteilung QV5 würde sich dann sukzessive ausgleichen. Das heißt, beim Befahren der einen Fahrgasse 21b zu schwach bestreute Bereiche würden mit beim Befahren der anderen Fahrgasse 21c zu stark bestreut. In der Praxis ist die Verlagerung durch den Wind 6 jedoch meist nicht linear, woraus eine gewisse asymmetrische Streubilddeformation resultiert mit der Folge einer lokalen Über- und Unterdüngung.

Zur Visualisierung der Verzerrung von Streufächern SF1 bis SF5 durch den Wind 6 sowie der kompensatorischen Anpassung bzw. Windkompensation können vereinfachte geometrische Darstellungen der aktuellen Streufächer SF1 bis SF5 und/oder Querverteilungen QV1 bis QV5 des Düngerstreuers 1 und/oder der einzelnen Streuscheiben 3 verwendet werden, beispielsweise Trapeze oder dergleichen Polygone.

Denkbar sind zudem bereits gebräuchliche Visualisierungen der Windrichtung, beispielsweise als vereinfachte Windrose, und Windstärke, beispielsweise als Balkendiagramm, mit farblicher Abstufung, beispielsweise im Sinne einer Ampel, je nachdem, ob und wie oft die Windkompensation an die Regelgrenzen des Regelungssystems 5 stößt oder theoretisch darüber hinaus geregelt / kompensiert werden müsste.

Zusätzlich kann eine aus Hinfahrt und Rückfahrt entlang benachbarter Fahrgassen 21a, 21b, 21c resultierende Querverteilung als Diagramm 23 dargestellt werden, welches im Idealfall (bezogen auf eine homogene Sollverteilung) eine horizontale Linie ergibt. Zudem wären in der Sätechnik gebräuchliche Darstellungen prinzipiell denkbar, beispielsweise auf Teilbreiten TB bezogene oder Farbskalen Balkendiagramme (nicht dargestellt) und/oder Echtzeitdarstellungen von Querverteilungen QV1 bis QV5 oder dergleichen.

Auch könnte das kompensatorische Entgegenwirken des Regelungssystems 5 bei Aktivität symbolisch dargestellt werden, beispielsweise durch Pfeile. Wenn die störenden Windeinflüsse vom Regelungssystem 5 nicht ausgeregelt / kompensiert werden können, kann dies farblich auf einer Applikationskarte 17 hinterlegt werden.

Farbliche Visualisierungen eignen sich besonders für Überdüngung und Unterdüngung, wobei jeweils betroffene Teilbereiche / Teilbreiten der landwirtschaftlichen Fläche 8 dann entsprechend farblich markiert werden können. Beispielsweise kann die jeweilige Fläche vor dem Streuvorgang nicht eingefärbt sein und bei einer ersten Überfahrt gelb werden. Grün wird die Fläche dann bei erfolgreicher Anschlussfahrt bzw. immer dann, wenn die Sollmenge erreicht ist. Fehlausbringungen können farbskaliert angezeigt werden.

Der Anwender kann dann visuell nachvollziehen, wie sich Streufächer SF1 bis SF5 durch den Wind 6 verformen (verzerren und/oder verlagern), und in welchem Ausmaß diese Verformung durch das Regelungssystem 5 kompensiert wird. Dadurch lässt sich erkennen, wie effektiv die Windkompensation in einer bestimmten Situation wirkt. Möglich sind beispielsweise Visualisierungen von Ist, Soll und Kompensation, also mögliche oder tatsächliche Wirkung der Windkompensation. Die zugrundeliegenden Daten können auch in der Datenbank 5b zu späteren Verwendung abgelegt werden.

Die Fig. 5A und 5B verdeutlichen den Windeinfluss beim Grenzstreuen, also einer Situation, bei der die dem Inneren der landwirtschaftlichen Fläche 8 zugewandte Streuscheibe 3 mit den Einstellungen für normale Arbeitsbreite AB1 betrieben wird, die auf der Seite der Grenze 8c der landwirtschaftlichen Fläche 8 angeordnete Streuscheibe 3 mit Einstellungen für eine demgegenüber reduzierte (nur einseitig erzeugte) Arbeitsbreite AB2.

Für das Grenzstreuen wird folglich ein auch bei Windstille entsprechend asymmetrischer sechster Streufächer SF6 in Sinne eines Soll-Streubilds verwendet, im Inneren dagegen der bereits beschriebene bezüglich Fahrtrichtung F achsensymmetrische erste Streufächer SF1.

Hierfür kann der Streufächer SF6 grundlegend verändert werden, indem man beispielsweise zunächst die Einstellung der Streuscheiben 3, Wurfschaufeln 3a und/oder eines zugeordneten Grenzstreuschirms (nicht dargestellt) anpasst.

In Verbindung mit beidseitig aktivierter Windkompensation durch das Regelungssystem 5 kann die Trägheit der Kompensationsregelung auf der Grenzseite dazu führen, dass der Dünger 2 bei stark schwankender Windstärke und/oder Windrichtung kurzzeitig über die Grenze hinausgeworfen wird. Dies kann beispielsweise passieren, wenn der Wind zunächst kräftig von der Grenze her weht und das Regelungssystem 5 deshalb die Drehzahl DZ2 und damit die Wurfenergie kompensatorisch erhöht. Wechselt der Wind 6 dann plötzlich die Richtung, kann das Regelungssystem 5 die Drehzahl DZ2 aufgrund der Massenträgheit der Streuscheibe 3 und/oder der Trägheit der Regelung gegebenenfalls nicht schnell genug senken.

Dem kann entgegengewirkt werden, indem das Regelungssystem 5 von wenigstens einer insbesondere vorausfliegenden und/oder Luv-seitig fliegenden Drohne 15 Information zu den aktuellen Windverhältnissen im Bereich der Grenze 8c erhält. Das heißt, man erfasst das entlang der Grenze 8c insbesondere unmittelbar vor dem aktuellen Streufächer SF6 stattfindende Windgeschehen und führt die Windkompensation auf dieser Grundlage vorausschauend durch. So könnten gegebenenfalls auch kurzfristige Windänderungen noch rechtzeitig berücksichtigt werden.

Alternativ oder ergänzend kann die Windkompensation durch das Regelungssystem 5 beim Grenzstreuen beidseitig oder nur auf der Grenzseite deaktiviert werden. Erfolgt dies automatisch, kann eine Warnmeldung ausgegeben werden dahingehend, dass die Windkompensation deaktiviert ist und sich die Windempfindlichkeit des Düngerstreuers 1 bzw. des Düngeraustrags dadurch erhöht hat. Das Regelungssystem 5 könnte eine solche Warnmeldung auch abhängig von der Stärke und/oder Variabilität des Windes 6 ausgeben und zwar erst dann, wenn sich die Qualität des Streubilds / des Streufächers SF6 mit gewisser Wahrscheinlichkeit in relevanter Weise verschlechtert.

In Abhängigkeit von der Stärke und/oder Variabilität des Winds 6 könnte das Regelungssystem 5 aber auch mit abgeschwächter Kompensation weiterbetrieben werden, beispielsweise eine Erhöhung der Drehzahlen DZ1, DZ1 gezielt um einen bestimmten Prozentsatz abschwächen gegenüber einer Kompensation bei stabilen Windverhältnissen. Eine Kompensationsabschwächung könnte automatisch ausgelöst werden.

Bei stark schwankenden Windbedingungen kann die Trägheit der Kompensationsregelung erhöht werden, sodass sich relevante kurzfristige Windeinflüsse ausmitteln oder diese Windeinflüsse nicht zu einer unerwünscht starken Reaktion (Überschwingen) der Kompensationsregelung führen. Beispielsweise könnte eine zu heftige kompensatorische Reaktion des Regelungssystems 5 auf einen kurzen Windstoß dem Streubild / Streufächer SF6 mehr schaden als die Inkaufnahme eines nicht kompensierten Windeinflusses.

Dies gilt für Feldgrenzen in besonderem Maße. Hier ist die Reaktion zusätzlich abhängig von der Hauptwindrichtung, also ob der Wind 6 von der Grenze 8c her oder auf diese zu weht. Die Regelträgheit sollte dann möglichst an die Hauptwindrichtung angepasst werden.

Weht der Wind beispielsweise von der Grenze 8c her, kann die Regelträgheit vergleichsweise hoch sein, da der Dünger 2 dann nicht kompensatorisch weiter Richtung Grenze geworfen wird und ein qualitativ schlechterer Streufächer SF6 nur auf der feldinneren Seite entstehen kann. Aufgrund gesetzlicher Vorgaben erfolgt die Optimierung dann stets zugunsten der Grenzsituation, also auf der Grenzseite, da Fehlausbringungen auf der Feldinnenseite eher hingenommen werden und nachfolgend gegebenenfalls noch ausgeglichen werden können.

Weht der Wind dagegen auf die Grenze 8c zu, muss das Regelungssystem 5 schneller reagieren, um ein Werfen des Düngers 2 über die Grenze 8c hinaus zuverlässig zu verhindern. Dabei muss eine möglicherweise gegebene Verschlechterung des Streufächers SF6 auf der Feldinnenseite in Kauf genommen werden. Dem kann jedoch entgegengewirkt werden, indem die Streuscheiben 3 und zugehörigen Einleitsysteme je nach Grenzsituation und Hauptwindrichtung mit unterschiedlicher Trägheit geregelt werden. Die Regelträgheit kann für die Streuscheiben 3 verschieden eingestellt sein, abhängig davon, ob sie der Grenze 8c zugewandt oder abgewandt sind. Beispielsweise kann die Regelung bei Wind zur Grenze 8c hin schneller reagieren, wenn der Wind zunimmt und langsamer nachregeln, wenn der Wind abnimmt.

Eine weitere Möglichkeit, das Risiko eines Werfens über die Feldgrenze zu reduzieren, ist die Erhöhung des Sollabstands 26 zur Grenze abhängig von Stärke und/oder Variabilität des Windes 6. Hierzu wird der Streufächer SF6 grundlegend verändert, indem beispielsweise zunächst die Einstellung der Streuscheiben 3, Wurfschaufeln 3a und/oder eines zugeordneten Grenzstreuschirms (nicht dargestellt) in Abhängigkeit von den Windverhältnissen angepasst wird. Auch dies kann automatisch erfolgen. Diese Vorgabe kann dann vom Regelungssystem 5 zusätzlich zur weiteren Windkompensation modifiziert werden.

Wie die Fig. 5A und 5B beispielhaft andeuten, kann die obige Differenzierung nach Hauptwindrichtung auch davon abhängen, welcher Flächentyp sich jenseits der Grenze 8c befindet. Handelt es sich beispielsweise um eine Straße 24, ist die Grenzsituation weniger kritisch als bei einem benachbarten Gewässer 25. Bei kritischen Grenzsituationen wird vorzugsweise ein Sollabstand 26 zwischen dem Streufächer SF6 und der Grenze 8c vorgegeben.

In den beschriebenen Fällen werden dann jeweils noch die Dosiermengen DM1, DM2 des Düngers 2 auf die Streuscheiben 3 bedarfsgerecht angepasst. Dadurch können unterschiedliche Ausbringmengen 27, 28 (pro Flächeneinheit) auf der Feldinnenseite (höher) und der Grenzseite (niedriger) des Streufächers SF6 eingestellt werden.

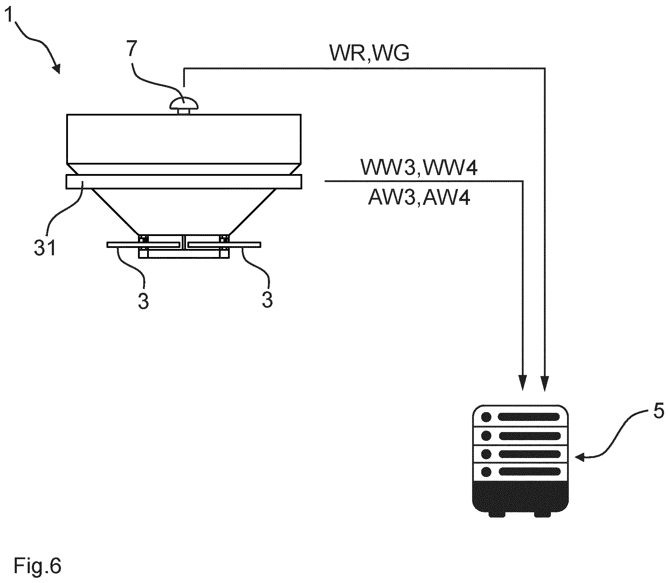

Die Fig. 6 zeigt schematisch eine Variante des Düngerstreuers 1, bei der (in der Fig. 1A schematisch angedeutete) Ist-Abwurfwinkel AW3, AW4 und die (in der Fig. 1B schematisch angedeuteten) Ist-Wurfweiten WW3, WW4 für die Streuscheiben 3 jeweils mit einem Überwachungssystem 31 beispielsweise mittels Radarstrahlung auf prinzipiell bekannte Weise laufend gemessen werden.

Das Regelungssystem 5 vergleicht die derart ermittelten Ist-Abwurfwinkel AW3, AW4 des Düngers 2 mit den gegebenenfalls kompensatorisch angepassten Soll-Abwurfwinkeln AW1, AW2. Je nach ermittelter Abweichung werden Einstellparameter des Düngerstreuers 1 derart verändert, dass sich die Ist-Abwurfwinkel AW3, AW4 möglichst den Soll-Abwurfwinkeln AW1, AW2 angleichen. Durch die Messung der Windrichtung WR und Windgeschwindigkeit WG des Winds 6 und insbesondere anschließende vektorielle Zerlegung in die Seitenkomponente WS und die Fahrtrichtungskomponente WF und/oder Berücksichtigung des Strömungseinflusses topografischer Merkmale 9 der landwirtschaftlichen Fläche 8 kann der Einfluss des jeweils herrschenden Windes 6 auf den abgegebenen Dünger 2 ermittelt und berücksichtigt werden.

Entsprechendes gilt für eine optionale Angleichung der Ist-Wurfweiten WW3, WW4 an die Soll-Wurfweiten WW1, WW2. Das Überwachungssystem 31 misst die Ist-Wurfweiten WW3, WW4 beispielsweise anhand der Wurfgeschwindigkeit des Düngers 2. Diese Messung erfolgt jedoch nur in einer Richtung, und der Windeinfluss auf diese Messung ist nicht genau quantifizierbar. Somit werden die Ist-Wurfweiten WW3, WW4 noch durch eine Rechenkomponente auf die reale Windsituation umgerechnet.

Um dem Störeinfluss des Windes 6 kompensatorisch entgegenzuwirken, werden dann die Soll-Abwurfwinkel AW1, AW2 und/oder Soll-Wurfweiten WW1, WW2 in Abhängigkeit vom vektoriell zerlegten und/oder topografisch korrigierten Wind 6 geeignet angepasst, wie bereits prinzipiell voranstehend beschrieben wurde.

Je nach Applikationssituation und der Anforderung an eine Kompensation von Windsituationen kann eine Vielzahl von Soll-Abwurfwinkel AW1, AW2 und/oder Soll-Wurfweiten WW1, WW2 in Form elektronischer Auswahltabellen oder dergleichen im Regelungssystem 5 vorgehalten werden. Es können auch alternativ die Einflüsse des Windes (in Form von Tabellen, Funktionen o. ä.) auf den Streufächer hinterlegt sein, mit denen dann die Veränderungen berechnet werden können. Anhand der Veränderung und weiterer Tabellen, Funktionen o.ä. können dann die notwendigen Korrekturen an den Einstellwerten berechnet werden. Damit lässt sich eine Vielzahl von Abhängigkeiten zwischen Einstellparametern und Abwurfparametern abbilden und situationsbedingt beim Streuen berücksichtigen.

Dies kann insbesondere dann vorteilhaft sein, wenn ein Überwachungssystem 31 zur Messung der Ist-Abwurfwinkel AW3, AW4 und/oder Ist-Wurfweiten WW3, WW4 des Düngers 2 nicht vorhanden ist. Ist beispielsweise nur der Windsensor 7 vorhanden, können elektronische Auswahltabellen oder dergleichen Mittel zur Abbildung obiger Abhängigkeiten in eine Windkompensation im voranstehend beschrieben Sinne vorteilhaft integriert werden.

Die Fig. 7 verdeutlicht den störenden Einfluss von beispielhaft schräg von vorne einfallendem Wind 6 auf eine Teilbreitenschaltung des Düngerstreuers 1. Demnach werden die einzelnen Teilbreiten TB eines bei Windstille erzeugten Streufächers SF1 auf der dem Wind 6 zugewandten Seite entgegen der Fahrtrichtung F nach hinten verlagert und zudem in seitlicher Richtung S aufeinander zu versetzt. Die Querverteilung der Teilbreiten TB wird dort somit gestaucht. Auf der dem Wind 6 abgewandten Seite werden die Teilbreiten TB ebenso nach hinten verlagert, aber in seitliche Richtung S voneinander weg versetzt. Die Querverteilung der Teilbreiten TB wird dort somit gespreizt.

Daraus resultiert ein siebter Streufächer SF7 mit einer auf der Windseite zu starken Überlappung benachbarter Teilbreiten TB. Auf der anderen Seite des siebten Streufächers SF7 (nur in Form der Teilbreiten TB angedeutet) ergeben sich dazwischen vergrößerte Lücken. Diese Lücken oder Überlappung visualisieren die Unter- bzw. Überdüngung lediglich in vereinfachender Weise, da Streufächer in der Praxis keine scharfen Grenzen aufweisen. Dementsprechend werden dann solche Bereiche zu viel oder zu wenig (aber nicht gar nicht) bestreut. Diese "Lücken" können jedoch Probleme bei der Visualisierung und der Verarbeitung auf den Streuergeräten verursachen.

Aufgrund der windbedingten Abweichung ΔWW der Ist-Wurfweiten WW3, WW4 von ihren Soll-Wurfweiten WW1, WW2 weichen zudem die (nicht kompensierten) Ist-Positionen Pi (im siebten Streufächer SF7) sämtlicher Teilbreiten TB in Fahrrichtung F gesehen von ihren Soll-Positionen PS (im ersten Streufächer SF1) ab. Die Teilbreiten TB werden dann ohne Windkompensation nicht passend zur Applikationsvorgabe geschaltet, im Beispiel vorzeitig. Das heißt, die Teilbreiten TB kommen erst später an einem bestimmten Ort an, als vom Regelungssystem 5 vermutet.

Eine Kompensation der windbedingten Abweichung ΔWW der Ist-Wurfweiten WW3, WW4 steht bei der Teilbreitenschaltung meist im Vordergrund. Dennoch kann je nach Windrichtung und Windstärke sowie je nach Überlappungsgrad der Teilbreiten TB im ersten Streufächer SF1 (Soll-Streubild) eine Korrektur einer zu stark gestauchten oder gespreizten Querverteilung der jeweils zu schaltenden Teilbreiten TB sinnvoll sein. Ein gezieltes Überlappen der Teilbreiten TB ist beispielsweise auch für den ersten Streufächer SF1 bekanntermaßen gewollt, um bei Kurvenfahrten und/oder bei Windeinfluss unbearbeitete Streifen in der Visualisierung und Verarbeitung auf den Steuergeräten zu vermeiden.

Das heißt, es kann eine Windkompensation vorgenommen werden, wie sie im Prinzip bezüglich der Fig. 1B und 1C beschrieben ist,, also dass in Seitenrichtung ausschließlich oder vorrangig eine Streubildkorrektur (Kompensation der seitlichen Streubildverlagerung) und in Fahrtrichtung ausschließlich oder vorrangig eine Schaltpunktkorretur (Kompensation der Streubildverlagerung in/entgegen Fahrtrichtung) vorgenommen wird.

Die Teilbreiten TB werden im Regelungssystem 5 des Düngerstreuers 1 vorzugsweise so angelegt, dass ihre Verteilung in seitlicher Richtung S und möglichst auch in Fahrtrichtung F die Bogenform des Streufächers SF1 bzw. des jeweiligen Soll-Streufächers widerspiegelt. Dann können Schaltpunkte besonders präzise berechnet und zugeordnet werden.

Zusätzlich weisen die Teilbreiten TB eine derartige Längenausdehnung 32 in Fahrtrichtung F auf, dass in seitlicher Richtung S (lateral) benachbarte Teilbreiten TB in Fahrtrichtung F überlappen. Dadurch lassen sich Lücken in der Visualisierung der der Verarbeitung auf den Steuerechnern auch bei einem Ausschwenken des Streufächers / der Teilbreiten TB bei Kurvenfahrten vermeiden. Dies ist in der Fig. 7 ebenso schematisch angedeutet.

Windbedingte Ist-Positionen von Teilbreiten TB können beispielsweise als Abweichung ihrer Soll-Positionen gemessen, berechnet und/oder angezeigt werden. Dadurch können Anwender in anschaulicher Form Positionen, Ausdehnungen und Mengenverteilungen und/oder Schaltpunkte von Streufächern abschätzen.

Die Berechnung der Schaltpunkte (korrespondierend mit den windbedingten Ist-Positionen der Teilbreiten) kann beispielsweise beim Wechsel zwischen Feldinnerem und Vorgewende eine wesentliche Rolle spielen, ebenso in Grenzsituationen und/oder bei Bearbeiten keilförmiger Flächen.

Bei zu starkem Wind 6 ist das Regelungssystem 5 mit den davon gesteuerten Aktoren gegebenenfalls nicht mehr in der Lage, die Windkompensation im eigentlich erforderlichen Umfang zu leisten. Der Anwender kann sich dann durch eine vereinfachte / anschauliche Visualisierung des resultierenden Streufächers SF1 bis SF7 ein Bild von der zugehörigen Querverteilung machen gegebenenfalls entscheiden, ob ein laufender Streuvorgang abgebrochen werden muss oder nicht.

Bei zu starkem Wind 6 und dennoch fortgesetzter Ausbringung kann der unzureichend windkompensierte Streufächer SF1 bis SF7 basierend auf den verwendeten Einstellparametern und dem gemessenen / berücksichtigten Windeinfluss georeferenziert hinterlegt werden, um einen zielgerichteten Ausgleich der fehlerhaften Düngerausbringung zu einem späteren Zeitpunkt zu ermöglichen.

Wenn die Applikationsanforderungen, beispielsweise die Beschaffenheit des Düngers 2, einen späteren Ausgleich zulassen, ist bei unzureichender Windkompensation eher eine Unterdüngung als eine Überdüngung anzustreben, da fehlender Dünger prinzipiell noch ergänzt werden kann. Eine Überdüngung kann dagegen nicht rückgängig gemacht werden und ist möglicherweise irreversibel schädlich.

Können störende Windverhältnissen nicht ausreichend kompensiert werden, ist ein Betrieb des Düngerstreuers 1 in einem "Wind-Not-Modus" denkbar mit sicherheitshalber verringerter Ausbringmenge. So lässt sich eine Grunddüngung gewährleisten und eine potentiell schädliche Überdüngung weitgehend vermeiden.

Ist der Wind 6 gleichmäßig so stark, dass sich ein fahrgassensymmetrischer Streufächer SF1 nicht herstellen lässt, kann dessen (dann zeitlich im Wesentlichen konstante) Verzerrung und/ oder Verlagerung gegebenenfalls auch in Kauf genommen werden. Die parallelen Fahrgassen 21a, 21b, 21c können dann mit dem verzerrten / verlagerten Streufächer SF2 bis SF4 bestreut werden, wobei beide seitlichen Flanken auf ähnliche Weise abfallen sollten, da sie bei jeweiliger Fahrt und zugehöriger Anschlussfahrt spiegelbildlich angeordnet sind. Unter Berücksichtigung der windbedingten Asymmetrie des jeweiligen Streufächers SF4 lässt sich auch so eine relativ gleichmäßige Überlappung erzielen. Dieser Fall kann in der Regelung durch einen besonderen Modus berücksichtigt werden, so dass die Korrektur der Regelparamter darauf abzielt einen Streufächer zu erzeugen, der zwar durch den Wind zu den Fahrgassen verschoben ist, sich aber in der Überlappung der gleichmäßg verschobenen Streufächer zu einer guten Querverteilung ergänzt.

Eine Anpassung / ein Ausgleich hinsichtlich Breite und Form des Streufächers SF2 bis SF4 sowie hinsichtlich der Ausbringmenge 27, 28 sind dann insbesondere bei der jeweils zuerst und zuletzt befahrenen Fahrgasse erforderlich. Der jeweils erforderliche Ausgleich kann aber auch mit einer windbedingt vergrößerten Sicherheitszone, also dem Sollabstand 26 zur Grenze 8c verrechnet werden.

## Patentansprüche

1. Verfahren zur elektronischen Windkompensation eines Düngerstreuers (1), der Dünger (2) auf eine landwirtschaftliche Fläche (8) mittels rotierender Streuscheiben (3) ausbringt, wobei das Verfahren von einem Regelungssystem (5) des Düngerstreuers (1) durchgeführt wird,
wobei die Positionen von Aufgabeflächen (4) für den Dünger auf den Streuscheiben in Abhängigkeit von Soll-Abwurfwinkeln (AW1, AW2) eingestellt werden, die für die Streuscheiben einzeln auf der Grundlage eines beim Ausbringen herrschenden Winds (6) kompensatorisch angepasst werden, um einer durch den Wind verursachten Abweichung (ΔQV) einer Ist-Querverteilung (QV2-QV5) des Düngers von einer Soll-Querverteilung (QV1) entgegenzuwirken,
wobei die Drehzahlen (DZ1, DZ2) der Streuscheiben kompensatorisch angepasst werden, um einer durch den Wind verursachten Abweichung (ΔWW) einer Ist-Wurfweite (WW3, WW4) des Düngers von einer Soll-Wurfweite (WW1, WW2) entgegenzuwirken,
**dadurch gekennzeichnet, dass**
die Windrichtung (WR) und die Windgeschwindigkeit (WG) des Winds (6) zur Anpassung der Soll-Abwurfwinkel (AW1, AW2) und/oder zur Reduzierung der Abweichung der Ist-Wurfweite (ΔWW) vektoriell in eine Fahrtrichtungskomponente (WF) parallel zur Fahrtrichtung (F) und eine Seitenkomponente (WS) orthogonal zur Fahrtrichtung zerlegt werden, und
dass die Abweichung (ΔWW) der Ist-Wurfweite (WW3, WW4) auf der Grundlage der Seitenkomponente (WS) und insbesondere unter deren überwiegender Gewichtung gegenüber einer zugehörigen Fahrtrichtungskomponente (WF) kompensatorisch reduziert wird.

2. Verfahren zur elektronischen Windkompensation eines Düngerstreuers (1), der Dünger (2) auf eine landwirtschaftliche Fläche (8) mittels rotierender Streuscheiben (3) ausbringt, wobei das Verfahren von einem Regelungssystem (5) des Düngerstreuers (1) durchgeführt wird,
wobei die Positionen von Aufgabeflächen (4) für den Dünger auf den Streuscheiben in Abhängigkeit von Soll-Abwurfwinkeln (AW1, AW2) eingestellt werden, die für die Streuscheiben einzeln auf der Grundlage eines beim Ausbringen herrschenden Winds (6) kompensatorisch angepasst werden, um einer durch den Wind verursachten Abweichung (ΔQV) einer Ist-Querverteilung (QV2-QV5) des Düngers von einer Soll-Querverteilung (QV1) entgegenzuwirken,
und wobei die Drehzahlen (DZ1, DZ2) der Streuscheiben kompensatorisch angepasst werden, um einer durch den Wind verursachten Abweichung (ΔWW) einer Ist-Wurfweite (WW3, WW4) des Düngers von einer Soll-Wurfweite (WW1, WW2) entgegenzuwirken,
wobei aus der Windrichtung (WR) und der Windgeschwindigkeit (WG) des Winds (6) eine Verlagerung (ΔSF) des mit den Streuscheiben (3) unter Windeinfluss erzeugten Streufächers (SF2) gegenüber einem ohne Windeinfluss erzeugten Streufächer (SF1) ermittelt wird, **dadurch gekennzeichnet, dass** wenigstens eine zur Fahrtrichtung (F) orthogonale Seitenkomponente (ΔSFS) der Verlagerung (ΔSF) zur Reduzierung der Abweichung der Ist-Wurfweite (ΔWW) berechnet wird, insbesondere eine Anpassung der Soll-Abwurfwinkel (AW1, AW2) auf der Grundlage der Verlagerung (ΔSF) insgesamt berechnet wird,
und dass die Abweichung (ΔWW) der Ist-Wurfweite (WW3, WW4) auf der Grundlage der Seitenkomponente (ΔSFS) und insbesondere unter deren überwiegender Gewichtung gegenüber einer zugehörigen Fahrtrichtungskomponente (ΔSFF) kompensatorisch reduziert wird.

3. Verfahren nach Anspruch 2, wobei die Soll-Abwurfwinkel (AW1, AW2) auf der Grundlage von der Verlagerung (ΔSF) zugeordneten Ist-Abwurfwinkeln und insbesondere unter Berücksichtigung der Kompensation der Ist-Wurfweite kompensatorisch angepasst werden.

4. Verfahren nach einem der vorigen Ansprüche, wobei von den Streuscheiben (3) erzeugte Streufächer (SF2-SF7) und/oder Querverteilungen (QV2-QV5) durch kompensatorische Reduzierung der Abweichung der Ist-Wurfweite (WW3, WW4) von ihrem Standardwert für Windstille korrigiert und insbesondere entzerrt werden, und/oder
wobei von den Streuscheiben (3) erzeugte Streufächer (SF2-SF7) und/oder Querverteilungen (QV2-QV5) durch kompensatorische Veränderung der Soll-Abwurfwinkel (AW1, AW2) gegenüber ihren Standardwerten für Windstille korrigiert und insbesondere entzerrt werden.

5. Verfahren nach einem der vorigen Ansprüche, wobei ein windverändernder und insbesondere windabschwächender Einfluss wenigstens eines auf der landwirtschaftlichen Fläche (8) vorhandenen topographischen Merkmals (9) durch Messung und/oder Berechnung quantifiziert wird und in eine Berechnung des im Bereich, insbesondere an einer geografischen Position (14) eines von den Streuscheiben (3) erzeugten Streufächers (SF1-SF7) herrschenden Winds (6) zu dessen Kompensation eingeht, insbesondere ausgehend von einem im Bereich der landwirtschaftlichen Fläche beim Ausbringen gemessenen Wind,
insbesondere wobei dem topographischen Merkmal (9) und/oder einem diesem zugeordneten Teilbereich (8a, 8b) der landwirtschaftlichen Fläche (8) Windkoeffizienten (12) zugeordnet werden, die den windverändernden Einfluss des topographischen Merkmals in Abhängigkeit von unterschiedlichen Windrichtungen (WR) quantifizieren.

6. Verfahren nach wenigstens einem der vorigen Ansprüche, wobei Windrichtung (WR) und Windgeschwindigkeit (WG) beim Ausbringen im Bereich des Düngerstreuers (1) gemessen und mit zugehörigen geografischen Messpositionen (13) gespeichert werden, und wobei diesen Messwerten ferner die geografische Position (10) wenigstens eines topographischen Merkmals (9) der landwirtschaftlichen Fläche (8) sowie eine herrschende Hauptwindrichtung und Hauptwindstärke zugeordnet werden, um einen windverändernden Einfluss des topografischen Merkmals ortsspezifisch insbesondere bezüglich Hauptwindrichtungen und Hauptwindstärken zu quantifizieren.

7. Verfahren nach wenigstens einem der vorigen Ansprüche, wobei in unterschiedlichen Höhen insbesondere mittels eines mit dem Düngerstreuer (1) mitfahrenden Windsensors (7) und einer die landwirtschaftliche Fläche (8) befliegenden Drohne (15) gemessene Windrichtungen (WR) und Windgeschwindigkeiten (WG) maschinell verglichen werden, um den im Bereich des Düngerstreuers herrschenden Wind (6) qualitativ abzuschätzen hinsichtlich des Vorherrschens gleichmäßiger, turbulenter oder böiger Windverhältnisse.

8. Verfahren nach wenigstens einem der vorigen Ansprüche, wobei mittels eines mit dem Düngerstreuer (1) mitfahrenden Windsensors (7) und/oder wenigstens einer die landwirtschaftliche Fläche (8) befliegenden Drohne (15) gemessene Windrichtungen (WR) und Windgeschwindigkeiten (WG) in Form einer Windkarte (16) gespeichert und insbesondere einer topografischen Karte (16a) der landwirtschaftlichen Fläche (8) überlagert werden,
insbesondere wobei die Windkarte (16) mit einer Applikationskarte (17) mit ortsspezifischen Soll-Streumengen und applizierten Ist-Streumengen des Düngers (2), einer Niederschlagskarte (18) mit historischen und/oder prognostizierten örtlichen Niederschlagsmengen, eine Sonneneinstrahlungskarte (19) mit historischen und/oder prognostizierten örtlichen Sonnenstunden, und/oder einer Einstellungskarte (20) mit ortsspezifischen Einstellwerten des Düngerstreuers (1) maschinell verglichen wird, um zukünftige Fahrten zum Ausbringen des Düngers (2) auf der landwirtschaftlichen Fläche (8) auf der Grundlage historischer Daten vergangener Fahrten von insbesondere korrespondierenden Ausbring-vorgängen zu planen.

9. Verfahren nach wenigstens einem der vorigen Ansprüche, wobei die Windrichtung (WR) und Windgeschwindigkeit (WG) sowie zugehörige geographische Messpositionen (13) mittels wenigstens einer die landwirtschaftliche Fläche (8) überfliegenden und insbesondere dem Düngerstreuer (1) vorausfliegenden Drohne (15) gemessen werden.

10. Verfahren nach wenigstens einem der vorigen Ansprüche, wobei die Streuscheiben (3) und zugehörigen Einleitsysteme beim Grenzstreuen je nach Windrichtung (WR) bezüglich der abgefahrenen Grenze (8c) mit unterschiedlicher Trägheit und/oder Amplitude geregelt werden, insbesondere relativ schnell / mit größerer Amplitude bei vom Düngerstreuer (1) zur Grenze hin wehendem Wind und relativ langsam / mit kleinerer Amplitude bei von der Grenze zum Düngerstreuer hin wehendem Wind und/oder
wobei beim Grenzstreuen Einstellwerte der Streuscheiben (3), daran vorhandener Wurfschaufeln (3a) und/oder eines zugeordneten Grenzstreuschirms und ergänzend ein Sollabstand (26) zur abgefahrenen Grenze (8c) jeweils in Abhängigkeit von der Windrichtung (WR) und Windgeschwindigkeit (WG) angepasst werden.

11. Verfahren nach wenigstens einem der vorigen Ansprüche, wobei auf der Grundlage berechneter oder gemessener Ist-Abwurfwinkel und der Ist-Wurfweiten (WW3, WW4) Form und/oder Lage von Streufächern (SF1-SF7) und/oder Querverteilungen (QV1-QV5) des Düngers (2) für die insbesondere im Bereich der Streufächer zugrunde gelegte Windrichtung (WR) und Windgeschwindigkeit (WG) berechnet und zugehörige kompensatorische Veränderungen insbesondere in Form von Polygonen angezeigt werden und/oder
wobei Überdüngung und Unterdüngung durch Farbskalierung betroffener Teilbereiche und/oder Teilbreiten (TB) der landwirtschaftlichen Fläche (8) kartografisch visualisiert werden, wobei insbesondere für Flächen vor dem Streuvorgang, nach erster Überfahrt, und nach Anschlussfahrt unterschiedliche Farbskalierungen verwendet werden.

12. Verfahren nach wenigstens einem der vorigen Ansprüche, wobei bei Teilbreitenschaltung Abweichungen windbedingter Ist-Positionen (Pi) einzelner Teilbreiten (TB) von ihren Soll-Positionen (PS) gemessen, berechnet und/oder angezeigt werden und/oder die Ist-Positionen (Pi) kompensatorisch angepasst werden.

13. Verfahren nach wenigstens einem der vorigen Ansprüche, wobei eine Datenbank (5b) und/oder wenigstens eine Funktion zur Charakterisierung einer Vielzahl unterschiedlicher Ausbringsituationen und/oder Windbedingungen und/oder Streubilder vorgehalten wird und Ist-Abwurfwinkel und die Ist-Wurfweiten (WW3, WW4) auf der Grundlage des jeweils eingestellten Streubilds und des gemessenen / abgeschätzten Winds berechnet werden.

14. Regelungssystem (5) für einen Düngerstreuer (1) mit einer Recheneinheit (5a) und wenigstens einem darin gespeicherten Programm zur kompensatorischen Regelung der Streuscheiben (3) des Düngerstreuers samt zugehörigen Einleitsystemen gemäß dem Verfahren nach wenigstens einem der vorigen Ansprüche.

15. Düngerstreuer (1) zum Ausbringen von Dünger (2) mittels zweier Streuscheiben (3) des Düngerstreuers (1), mit dem Regelungssystem (5) nach Anspruch 14.

## Claims

1. Method for electronically compensating for wind in a fertilizer spreader (1) which applies fertilizer (2) to an agricultural area (8) by means of rotating spreading disks (3), wherein the method is performed by a control system (5) of the fertilizer spreader (1),
wherein the positions of feed surfaces (4) for the fertilizer on the spreading disks are set depending on target discharge angles (AW1, AW2) which are adjusted individually for the spreading disks in a compensatory manner on the basis of a wind (6) prevailing during the application in order to counteract a deviation (ΔQV) of an actual transverse distribution (QV2-QV5) of the fertilizer from a target transverse distribution (QV1) caused by the wind,
wherein
the speeds (DZ1, DZ2) of the spreading disks are adjusted in a compensatory manner in order to counteract a deviation (ΔWW) of an actual throwing distance (WW3, WW4) of the fertilizer from a target throwing distance (WW1, WW2) caused by the wind,
**characterized in that**
the wind direction (WR) and the wind speed (WG) of the wind (6) are vectorially decomposed into a travel direction component (WF) parallel to the travel direction (F) and a lateral component (WS) orthogonal to the travel direction in order to adjust the target discharge angles (AW1, AW2) and/or in order to reduce the deviation of the actual throwing distance (ΔWW), and
**in that**
the deviation (ΔWW) of the actual throwing distance (WW3, WW4) is reduced in a compensatory manner on the basis of the lateral component (WS), in particular with the weighting thereof being more significant than an associated travel direction component (WF).

2. Method for electronically compensating for wind in a fertilizer spreader (1) which applies fertilizer (2) to an agricultural area (8) by means of rotating spreading disks (3), wherein the method is performed by a control system (5) of the fertilizer spreader (1),
wherein the positions of feed surfaces (4) for the fertilizer on the spreading disks are set depending on target discharge angles (AW1, AW2) which are adjusted individually for the spreading disks in a compensatory manner on the basis of a wind (6) prevailing during the application in order to counteract a deviation (ΔQV) of an actual transverse distribution (QV2-QV5) of the fertilizer from a target transverse distribution (QV1) caused by the wind,
and wherein the speeds (DZ1, DZ2) of the spreading disks are adjusted in a compensatory manner in order to counteract a deviation (ΔWW) of an actual throwing distance (WW3, WW4) of the fertilizer from a target throwing distance (WW1, WW2) caused by the wind,
wherein a shift (ΔSF) of the spread fan (SF2) produced by the spreading disks (3) under the influence of wind relative to a spread fan (SF1) produced without the influence of wind is ascertained from the wind direction (WR) and the wind speed (WG) of the wind (6), **characterized in that** at least one lateral component (ΔSFS), orthogonal to the travel direction (F), of the shift (ΔSF) is calculated in order to reduce the deviation of the actual throwing distance (ΔWW), in particular an adjustment of the target discharge angles (AW1, AW2) is calculated on the basis of the total shift (ΔSF),
and **in that**
the deviation (ΔWW) of the actual throwing distance (WW3, WW4) is reduced in a compensatory manner on the basis of the lateral component (ΔSFS), in particular with the weighting thereof being more significant than an associated travel direction component (ΔSFF).

3. Method according to claim 2, wherein the target discharge angles (AW1, AW2) are adjusted in a compensatory manner on the basis of actual discharge angles assigned to the shift (ΔSF), in particular taking into account the compensation of the actual throwing distance.

4. Method according to any of the preceding claims, wherein transverse distributions (QV2-QV5) and/or spread fans (SF2-SF7) produced by the spreading disks (3) are corrected and in particular equalized by reducing the deviation of the actual throwing distance (WW3, WW4) from its standard value for non-windy conditions in a compensatory manner, and/or
wherein transverse distributions (QV2-QV5) and/or spread fans (SF2-SF7) produced by the spreading disks (3) are corrected and in particular equalized by changing the target discharge angles (AW1, AW2) relative to their standard values for non-windy conditions in a compensatory manner.

5. Method according to any of the preceding claims, wherein a wind-changing and in particular wind-weakening influence of at least one topographic feature (9) present in the agricultural area (8) is quantified by measuring and/or calculating and is included when calculating the wind (6) prevailing in the region, in particular at a geographic position (14) of a spread fan (SF1-SF7) produced by the spreading disks (3), for in order to compensate therefor, in particular starting from a wind measured in the region of the agricultural area during the application,
in particular wherein wind coefficients (12) are assigned to the topographic feature (9) and/or to a sub-region (8a, 8b) of the agricultural area (8) assigned thereto that quantify the wind-changing influence of the topographic feature depending on different wind directions (WR).

6. Method according to at least one of the preceding claims, wherein the wind direction (WR) and the wind speed (WG) are measured in the region of the fertilizer spreader (1) during the application and are stored with associated geographic measurement positions (13), and wherein these measurement values are further assigned the geographic position (10) of at least one topographic feature (9) of the agricultural area (8) as well as a prevailing main wind direction and main wind strength in order to quantify a wind-changing influence of the topographic feature in a location-specific manner, in particular with regard to main wind directions and main wind strengths.

7. Method according to at least one of the preceding claims, wherein wind directions (WR) and wind speeds (WG) measured at different heights, in particular by means of a wind sensor (7) traveling with the fertilizer spreader (1) and by means of a drone (15) flying over the agricultural area (8), are compared by machine in order to qualitatively assess the wind (6) prevailing in the region of the fertilizer spreader with regard to the predominance of uniform, turbulent or gusty wind conditions.

8. Method according to at least one of the preceding claims, wherein wind directions (WR) and wind speeds (WG) measured by means of a wind sensor (7) traveling with the fertilizer spreader (1) and/or by means of at least one drone (15) flying over the agricultural area (8) are stored in the form of a wind map (16) and in particular are superimposed on a topographic map (16a) of the agricultural area (8),
in particular wherein the wind map (16) is compared by machine to an application map (17) with location-specific target spreading quantities and applied actual spreading quantities of the fertilizer (2), a precipitation map (18) with historical and/or forecast local precipitation quantities, a solar radiation map (19) with historical and/or forecast local sunshine hours, and/or a setting map (20) with location-specific setting values of the fertilizer spreader (1) in order to plan future trips for applying the fertilizer (2) to the agricultural area (8) on the basis of historical data from past trips of in particular corresponding application processes.

9. Method according to at least one of the preceding claims, wherein the wind direction (WR) and the wind speed (WG) as well as associated geographic measurement positions (13) are measured by means of at least one drone (15) flying over the agricultural area (8) and in particular flying ahead of the fertilizer spreader (1).

10. Method according to at least one of the preceding claims, wherein the spreading disks (3) and associated inlet systems are controlled with different inertia and/or amplitude during the boundary spreading depending on the wind direction (WR) with respect to the traveled boundary (8c), in particular relatively quickly/with a greater amplitude when the wind is blowing from the fertilizer spreader (1) toward the boundary and relatively slowly/with a lesser amplitude when the wind is blowing from the boundary toward the fertilizer spreader and/or
wherein during the boundary spreading, setting values of the spreading disks (3), of throwing vanes (3a) present thereon and/or of an assigned boundary spreading screen and additionally a target spacing (26) from the traveled boundary (8c) are each adjusted depending on the wind direction (WR) and the wind speed (WG).

11. Method according to at least one of the preceding claims, wherein on the basis of calculated or measured actual discharge angles and the actual throwing distances (WW3, WW4), the shape and/or position of spread fans (SF1-SF7) and/or transverse distributions (QV1-QV5) of the fertilizer (2) are calculated for the wind direction (WR) and the wind speed (WG) assumed in particular in the region of the spread fans, and associated compensatory changes are displayed in particular in the form of polygons and/or
wherein over-fertilization and under-fertilization are visualized cartographically by color scaling of relevant sub-regions and/or sub-widths (TB) of the agricultural area (8), wherein different color scalings are used in particular for areas before the spreading process, after the first pass and after the subsequent pass.

12. Method according to at least one of the preceding claims, wherein in partial width control, deviations of wind-related actual positions (Pi) of individual partial widths (TB) from their target positions (PS) are measured, calculated and/or displayed and/or the actual positions (Pi) are adjusted in a compensatory manner.

13. Method according to at least one of the preceding claims, wherein a database (5b) and/or at least one function for characterizing a multitude of different application situations and/or wind conditions and/or spread patterns is maintained and actual discharge angles and the actual throwing distances (WW3, WW4) are calculated on the basis of each set spread pattern and of the measured/assessed wind.

14. Control system (5) for a fertilizer spreader (1), comprising a computing unit (5a) and at least one program stored therein for controlling the spreading disks (3) of the fertilizer spreader together with associated inlet systems in a compensatory manner according to the method according to at least one of the preceding claims.

15. Fertilizer spreader (1) for applying fertilizer (2) by means of two spreading disks (3) of the fertilizer spreader (1), comprising the control system (5) according to claim 14.

## Revendications

1. Procédé pour la compensation électronique du vent pour un épandeur d'engrais (1) qui épand de l'engrais (2) sur une surface agricole (8) à l'aide de disques d'épandage (3) rotatifs, dans lequel le procédé est mis en œuvre par un système de régulation (5) de l'épandeur d'engrais (1),
dans lequel les positions de surfaces de déversement (4) pour l'engrais sur les disques d'épandage sont réglées en fonction d'angles de projection de consigne (AW1, AW2) qui sont ajustés, de manière à compenser, individuellement pour les disques d'épandage en fonction du vent (6) soufflant lors de l'épandage, afin de contrer un écart (ΔQV), provoqué par le vent, d'une répartition transversale réelle (QV2-QV5) de l'engrais par rapport à une répartition transversale de consigne (QV1), dans lequel
les vitesses de rotation (DZ1, DZ2) des disques d'épandage sont ajustées de manière à compenser afin de contrer un écart (ΔWW), provoqué par le vent, entre une portée réelle (WW3, WW4) de l'engrais et une portée de consigne (WW1, WW2),
**caractérisé en ce que**
la direction du vent (WR) et la vitesse du vent (WG) du vent (6) sont décomposées selon des vecteurs en une composante de direction de déplacement (WF) parallèle à la direction de déplacement (F) et en une composante latérale (WS) orthogonale à la direction de déplacement, afin d'ajuster les angles de projection de consigne (AW1, AW2) et/ou de réduire l'écart de la portée réelle (ΔWW), et
**que**
l'écart (ΔWW) de la portée réelle (WW3, WW4) est réduit de manière à compenser en fonction de la composante latérale (WS) et, en particulier, selon la pondération prépondérante de celle-ci par rapport à une composante de direction de déplacement (WF) associée.

2. Procédé pour la compensation électronique du vent pour un épandeur d'engrais (1) qui épand de l'engrais (2) sur une surface agricole (8) à l'aide de disques d'épandage (3) rotatifs, dans lequel le procédé est mis en œuvre par un système de régulation (5) de l'épandeur d'engrais (1),
dans lequel les positions de surfaces de déversement (4) pour l'engrais sur les disques d'épandage sont réglées en fonction d'angles de projection de consigne (AW1, AW2) qui sont ajustés, de manière à compenser, individuellement pour les disques d'épandage en fonction du vent (6) soufflant lors de l'épandage, afin de contrer un écart (ΔQV), provoqué par le vent, d'une répartition transversale réelle (QV2-QV5) de l'engrais par rapport à une répartition transversale de consigne (QV1), et dans lequel
les vitesses de rotation (DZ1, DZ2) des disques d'épandage sont ajustées de manière à compenser afin de contrer un écart (ΔWW), provoqué par le vent, entre une portée réelle (WW3, WW4) de l'engrais et une portée de consigne (WW1, WW2), dans lequel un décalage (ΔSF) du faisceau d'épandage (SF2) généré par les disques d'épandage (3) sous l'influence du vent par rapport à un faisceau d'épandage (SF1) généré sans influence du vent est déterminé à partir de la direction du vent (WR) et de la vitesse du vent (WG) du vent (6), **caractérisé en ce qu'**au moins une composante latérale (ΔSFS) du décalage (ΔSF), orthogonale à la direction de déplacement (F), est calculée afin de réduire l'écart de la portée réelle (ΔWW), en particulier un réglage des angles de projection de consigne (AW1, AW2) est calculé globalement en fonction du décalage (ΔSF),
et que
l'écart (ΔWW) de la portée réelle (WW3, WW4) est réduit de manière à compenser en fonction de la composante latérale (ΔSFS) et, en particulier, selon la pondération prépondérante de celle-ci par rapport à une composante de direction de déplacement (ΔSFF) associée.

3. Procédé selon la revendication 2, dans lequel les angles de projection de consigne (AW1, AW2) sont réglés de manière à compenser en fonction des angles de projection réels associés au décalage (ΔSF) et, en particulier, en tenant compte de la compensation de la portée réelle.

4. Procédé selon l'une des revendications précédentes, dans lequel les faisceaux d'épandage (SF2-SF7) générés par les disques d'épandage (3) et/ou les répartitions transversales (QV2-QV5) sont corrigés, et en particulier sont égalisés, par une réduction de compensation de l'écart de la portée réelle (WW3, WW4) par rapport à sa valeur standard en l'absence de vent, et/ou
dans lequel les faisceaux d'épandage (SF2-SF7) générés par les disques d'épandage (3) et/ou les répartitions transversales (QV2-QV5) sont corrigés, et en particulier sont égalisés, par une modification de compensation des angles de projection de consigne (AW1, AW2) par rapport à leurs valeurs standard en l'absence de vent.

5. Procédé selon l'une des revendications précédentes, dans lequel l'influence modifiant le vent, et en particulier atténuant le vent, d'au moins une caractéristique topographique (9) présente sur la surface agricole (8) est quantifiée par mesure et/ou calcul, et est prise en compte dans un calcul du vent (6) soufflant dans la zone, en particulier en une position géographique (14) d'un faisceau d'épandage (SF1-SF7) généré par les disques d'épandage (3), afin de compenser ledit vent, en particulier à partir du vent mesuré dans la zone de la surface agricole lors de l'épandage,
en particulier dans lequel des coefficients de vent (12) sont associés à la caractéristique topographique (9) et/ou à une zone partielle (8a, 8b) de la surface agricole (8) qui lui est associée, lesquels quantifient l'influence modifiant le vent de la caractéristique topographique en fonction de différentes directions du vent (WR).

6. Procédé selon au moins l'une des revendications précédentes, dans lequel la direction du vent (WR) et la vitesse du vent (WG) sont mesurées lors de l'épandage dans la zone de l'épandeur d'engrais (1) et enregistrées avec les positions géographiques de mesure (13) associées, et dans lequel sont en outre associées auxdites valeurs de mesure la position géographique (10) d'au moins une caractéristique topographique (9) de la surface agricole (8) ainsi qu'une direction dominante du vent et une force dominante du vent qui souffle, afin de quantifier l'influence modifiant le vent de la caractéristique topographique de manière spécifique à un emplacement, en particulier en ce qui concerne les directions dominantes du vent et les forces dominantes du vent.

7. Procédé selon au moins l'une des revendications précédentes, dans lequel les directions du vent (WR) et les vitesses du vent (WG) mesurées à différentes hauteurs, en particulier à l'aide d'un capteur de vent (7) se déplaçant avec l'épandeur d'engrais (1) et d'un drone (15) survolant la surface agricole (8), sont comparées par machine afin d'évaluer qualitativement le vent (6) soufflant dans la zone de l'épandeur d'engrais en ce qui concerne la prévalence de conditions de vent uniformes, turbulentes ou en rafales.

8. Procédé selon au moins l'une des revendications précédentes, dans lequel les directions du vent (WR) et les vitesses du vent (WG) mesurées à l'aide d'un capteur de vent (7) se déplaçant avec l'épandeur d'engrais (1) et/ou d'au moins un drone (15) survolant la surface agricole (8) sont enregistrées sous la forme d'une carte du vent (16) et sont en particulier superposées à une carte topographique (16a) de la surface agricole (8),
en particulier, dans lequel la carte du vent (16) est comparée par machine avec une carte d'application (17) comportant des quantités d'épandage de consigne spécifiques à un emplacement et des quantités d'épandage réelles de l'engrais (2) appliquées, une carte des précipitations (18) comportant des quantités de précipitations locales historiques et/ou prévues, une carte du rayonnement solaire (19) comportant des heures d'ensoleillement locales historiques et/ou prévues, et/ou une carte d'ajustement (20) comportant des valeurs d'ajustement spécifiques à un emplacement de l'épandeur d'engrais (1), afin de planifier les futurs passages pour l'épandage de l'engrais (2) sur la surface agricole (8) sur la base de données historiques de passages antérieurs de processus d'épandage correspondant en particulier.

9. Procédé selon au moins l'une des revendications précédentes, dans lequel la direction du vent (WR) et la vitesse du vent (WG), ainsi que les positions géographiques de mesure (13) associées, sont mesurées à l'aide d'au moins un drone (15) survolant la surface agricole (8) et en particulier précédant l'épandeur d'engrais (1).

10. Procédé selon au moins l'une des revendications précédentes, dans lequel les disques d'épandage (3) et des systèmes d'alimentation associés sont régulés, lors de l'épandage en bordure, par rapport à la bordure (8c) parcourue avec une inertie et/ou une amplitude variables en fonction de la direction du vent (WR), en particulier de manière relativement rapide/avec une amplitude plus importante lorsque le vent souffle depuis l'épandeur d'engrais (1) vers la bordure, et relativement lentement/avec une amplitude plus faible lorsque le vent souffle de la bordure vers l'épandeur d'engrais, et/ou
dans lequel, lors de l'épandage en bordure, des valeurs d'ajustement des disques d'épandage (3), des pales de projection (3a) qui y sont prévues et/ou d'un moyen de protection d'épandage en bordure associé, et en outre, une distance de consigne (26) par rapport à la bordure (8c) parcourue, sont respectivement réglées en fonction de la direction du vent (WR) et de la vitesse du vent (WG).

11. Procédé selon au moins l'une des revendications précédentes, dans lequel, sur la base d'angles de projection réels calculés ou mesurés et des portées réelles (WW3, WW4), la forme et/ou la position de faisceaux d'épandage (SF1-SF7) et/ou de répartitions transversales (QV1-QV5) de l'engrais (2) sont calculées pour la direction du vent (WR) et la vitesse du vent (WG) prises comme référence, en particulier dans la zone des faisceaux d'épandage, et des modifications de compensation associées sont affichées, en particulier sous forme de polygones, et/ou
dans lequel la surfertilisation et la sous-fertilisation sont visualisées de manière cartographique au moyen d'une échelle de couleurs de zones partielles et/ou de largeurs partielles (TB) concernées de la surface agricole (8), dans lequel, en particulier, des échelles de couleurs différentes sont utilisées pour des surfaces avant le processus d'épandage, après le premier passage, et après le passage final.

12. Procédé selon au moins l'une des revendications précédentes, dans lequel, lors de l'activation des largeurs partielles, des écarts entre des positions réelles (Pi) dues au vent de largeurs partielles (TB) individuelles et leurs positions de consigne (PS) sont mesurés, calculés et/ou affichés, et/ou les positions réelles (Pi) sont réglées de manière à compenser.

13. Procédé selon au moins l'une des revendications précédentes, dans lequel une base de données (5b) et/ou au moins une fonction permettant de caractériser une pluralité de situations d'épandage et/ou de conditions du vent et/ou de profils d'épandage différents sont mises à disposition, et des angles de projection réels et les portées réelles (WW3, WW4) sont calculés sur la base du profil d'épandage respectivement ajusté et du vent mesuré/estimé.

14. Système de régulation (5) pour un épandeur d'engrais (1) comportant une unité de calcul (5a) et au moins un programme qui y est enregistré pour la régulation de manière à compenser des disques d'épandage (3) de l'épandeur d'engrais ainsi que de systèmes d'alimentation associés, conformément au procédé selon au moins l'une des revendications précédentes.

15. Épandeur d'engrais (1) destiné à épandre de l'engrais (2) à l'aide de deux disques d'épandage (3) de l'épandeur d'engrais (1), comportant le système de régulation (5) selon la revendication 14.
